# EUROPEAN PATENT SPECIFICATION

(11) **EP 3 989 359 B1**
(45) Date of publication and mention of the grant of the patent: **02.10.2024**
(21) Application number: 21191702.6
(22) Date of filing: 17.08.2021
(51) Int. Cl.: H01Q 1/46, H01Q 13/08, H01P 3/10, H01Q 1/12, H01P 5/08, H04B 3/56

(54) **SURFACE WAVE LAUNCHER FOR HIGH-SPEED DATA LINKS OVER HIGH-VOLTAGE POWER LINES WITH LOSS COMPENSATION STRUCTURE**
OBERFLÄCHENWELLENSTARTER FÜR HOCHGESCHWINDIGKEITSDATENVERBINDUNGEN ÜBER HOCHSPANNUNGSSTROMLEITUNGEN MIT VERLUSTKOMPENSATIONSSTRUKTUR
LANCEUR D'ONDE DE SURFACE POUR DES LIAISONS DE DONNÉES À GRANDE VITESSE SUR DES LIGNES ÉLECTRIQUES HAUTE TENSION AVEC STRUCTURE DE COMPENSATION DE PERTE

(30) Priority: 23.10.2020 IN 202041046396; 22.06.2021 US 202117353866
(43) Date of publication of application: 27.04.2022
(73) Proprietor: INTEL Corporation, Santa Clara, CA 95054 (US)
(72) Inventor: PARTHASARATHY, Ramaswamy, 560035 Bangalore (IN); SHARMA, Ajay, 560016 Bangalore (IN); THAKUR, Jayprakash, 560035 Bangalore (IN); SHARMA, Manish, 560037 Bangalore (IN); BHATIA, Neel, 400008 Mumbai (IN); PANDIT, Vishram, 560103 Bangalore, Karnataka (IN); RAMACHANDRA, Satish, 560100 Bangalore (IN); SINGH, Vaibhavdeep, Santa Clara, 95054 (US); TUNGANI CHIKKABASAVAIAH, Ravichandra, Santa Clara, 95054 (US); PANIGRAHI, Rajiv, Santa Clara, 95054 (US)
(74) Representative: Viering, Jentschura & Partner mbB Patent- und Rechtsanwälte

(56) References cited:
- US-A1- 2004 169 572
- US-A1- 2018 113 161
- US-A1- 2019 131 717
- ALAM M N ET AL: "Novel surface wave exciters for power line fault detection and communications", ANTENNAS AND PROPAGATION (APSURSI), 2011 IEEE INTERNATIONAL SYMPOSIUM ON, IEEE, 3 July 2011 (2011-07-03), pages 1139 - 1142, XP031957814, ISBN: 978-1-4244-9562-7, DOI: 10.1109/APS.2011.5996484
- SHARMA APOORVA ET AL: "A Coplanar Vivaldi-Style Launcher for Goubau Single-Wire Transmission Lines", IEEE ANTENNAS AND WIRELESS PROPAGATION LETTERS, vol. 16, 21 September 2017 (2017-09-21), pages 2955 - 2958, XP011672457, ISSN: 1536-1225, [retrieved on 20171027], DOI: 10.1109/LAWP.2017.2755548
- SHARMA APOORVA ET AL: "Long-Range Battery-Free UHF RFID With a Single Wire Transmission Line", IEEE SENSORS JOURNAL, IEEE, USA, vol. 17, no. 17, 1 September 2017 (2017-09-01), pages 5687 - 5693, XP011658501, ISSN: 1530-437X, [retrieved on 20170809], DOI: 10.1109/JSEN.2017.2727494
- GLENN ELMORE: "Introduction to the Propagating Wave on a Single Conductor", 27 July 2009 (2009-07-27), pages 1 - 30, XP055553354, Retrieved from the Internet <URL:http://www.corridor.biz/FullArticle.pdf> [retrieved on 20190207]

## Description

### CROSS-REFERENCE TO RELATED APPLICATIONS

This patent application claims the benefit of and priority to India Provisional App. No. 202041046396 filed October 23, 2020 titled "SURFACE WAVE LAUNCHER FOR HIGH-SPEED DATA LINKS OVER HIGH-VOLTAGE POWER LINES WITH LOSS COMPENSATION".

### FIELD

The aspects discussed in the present disclosure are related to surface wave launcher for high-speed data links over high-voltage power lines with loss compensation structure.

### BACKGROUND

Unless otherwise indicated in the present disclosure, the materials described in the present disclosure are not prior art to the claims in the present application and are not admitted to be prior art by inclusion in this section.

Broadband connectivity (e.g., signals within a Wi-Fi frequency band, a Wi-Fi extended frequency band, a cellular frequency band, fifth generation (5G) frequency band, or similar frequency bands) may be provided to some areas using surface wave launchers and current infrastructures. The surface wave launchers may launch a surface wave on power lines. In addition, surface wave launchers may receive the surface wave from the power line. The surface wave launcher may convert the surface wave to a radio frequency (RF) signal and may provide the RF signal to a local area network (LAN).

The subject matter claimed in the present disclosure is not limited to aspects that solve any disadvantages or that operate only in environments such as those described above. Rather, this background is only provided to illustrate one example technology area where some aspects described in the present disclosure may be practiced.

In the document ALAM M N ET AL, "Novel surface wave exciters for power line fault detection and communications", ANTENNAS AND PROPAGATION (APSURSI), 2011 IEEE INTERNATIONAL SYMPOSIUM ON, IEEE, (20110703), doi:10.1109/APS.2011.5996484, ISBN 978-1-4244-9562-7, pages 1139 - 1142, a class of surface wave launchers that are designed to operate against insulated power line conductors is described. The monopole is made from a flexible copper conductor and wrapped around the power cable. The ground plane is also made from copper conductor but it has a very thin paper insulation layer on one side. The ground plane is parallel to the monopole.

In the document SHARMA APOORVA ET AL, "A Coplanar Vivaldi-Style Launcher for Goubau Single-Wire Transmission Lines", IEEE ANTENNAS AND WIRELESS PROPAGATION LETTERS, vol. 16, doi:10.1109/LAWP.2017.2755548, ISSN 1536-1225, (20170921), pages 2955 - 2958, a coplanar Vivaldi-style launcher for single-wire transmission lines is described.

In the document SHARMA APOORVA ET AL, "Long-Range Battery-Free UHF RFID With a Single Wire Transmission Line", IEEE SENSORS JOURNAL, IEEE, USA, vol. 17, no. 17, doi:10.1109/JSEN.2017.2727494, ISSN 1530-437X, (20170901), pages 5687 - 5693, a long-range passive (battery-free) RF identification and distributed sensing system using a single wire transmission line as the communication channel is described.

US 2018/0113161 A1 describes devices, apparatuses, systems, and methods involving the use of field probes with voltage-controlled variable impedance elements and surface-launched acoustic wave devices, including surface acoustic wave (SAW) devices and SAW sensor-tag wireless interface devices to measure voltage and current in current carrying conductors (CCCs) via measurement of the electric fields and magnetic fields around said CCCs are described.

US 2019/0131717 A1 describes a planar antenna configured to transmit first signals as a first guided electromagnetic wave that is bound to a surface of a transmission medium.

### SUMMARY

The object to be solved is to effectively transfer power to the surface wave propagation on the power lines in an efficient manner. The object is achieved by the present invention in the aspects of a surface wave launcher and a method having the features of the independent claims. Additional features for advantageous embodiments are provided in the dependent claims.

### BRIEF DESCRIPTION OF THE DRAWINGS

Exemplary aspects will be described and explained with additional specificity and detail through the use of the accompanying drawings in which:
FIG. 1 illustrates a block diagram of an exemplary operational environment to provide broadband connectivity over power lines;
FIG. 2 illustrates an exemplary surface wave launcher that may be implemented in the environment of FIG. 1;
FIGS. 3A and 3B illustrate an exemplary method of assembling the surface wave launcher of FIG. 2;
FIG. 4 illustrates an exemplary surface wave launcher that may be implemented in the environment of FIG. 1;
FIG. 5 illustrates a block diagram of an exemplary operational environment to provide data links over power lines;
FIG. 6 illustrates an exemplary loss compensation device that may be implemented in the environment of FIG. 5;
FIG. 7 illustrate exemplary physical changes in the power lines that may occur in the environment of FIG. 5;
FIG. 8 illustrates a graphical representation of a simulation of return loss for the surface wave launcher of FIG. 2;
FIG. 9 illustrates graphical representations of simulations of H fields of the surface wave launcher of FIG. 2 at various frequencies;
FIG. 10 illustrates a graphical representation of a simulation of surface currents for the surface wave launcher and the power line of FIG. 2;
FIG. 11 illustrates graphical representations of simulations of radiation patterns of the surface wave launcher of FIG. 2 at various frequencies;
FIG. 12, including FIG. 12A, FIG. 12B, and FIG. 12C, illustrates a graphical representation of simulations of return loss, H Field, and max gain vs. frequency of the surface wave launcher of FIG. 2 with various thicknesses of the insulator;
FIG. 13 illustrates a graphical representation of a simulation of surface currents for the surface wave launcher and the power lines,
all according to at least one aspect described in the present disclosure.

### DETAILED DESCRIPTION

The following detailed description refers to the accompanying drawings that show, by way of illustration, exemplary details in which aspects of the present disclosure may be practiced.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Providing broadband connectivity (e.g., signals within Wi-Fi or similar frequency bands) to areas that currently do not include broadband connectivity may be difficult or cost prohibitive due to technical feasibility, current infrastructure barriers, or some combination thereof. For example, in some areas, a lack of infrastructure (e.g., lack of line of sight antennas, fiber optic cables, coaxial cables, etc.) may be prohibitive for providing broadband connectivity to those areas.

Installing new infrastructure may include high costs, complexity, and time delays for providing broadband connectivity. Wired networks (e.g., fiber optic cables, broadband cables, coaxial cables, etc.) may consume space to dig and place the cables. In addition, installing cables in an overhead configuration may be risk prohibitive due to a likelihood of theft of the cables. Coverage of wireless networks in some areas may be limited due to line of sight operation and cost of antennas. Some power line communication technologies may be limited due to low data rates.

Surface wave launchers configured to launch surface waves on power lines may provide an option for providing broadband connectivity in these areas using existing infrastructure (e.g., power poles and power lines). The surface wave launchers may generate the surface waves by converting radio frequency (RF) signals with a transverse electromagnetic (TEM) mode to surface waves with a transverse magnetic (TM) mode.

A surface wave launcher may provide broadband connectivity with increased data rates over power lines compared to other power line communication technologies. In addition, a loss compensation device may be implemented to compensate for bends, breaks, forks, or other physical changes in the power lines. The surface wave launcher may operate within an RF frequency while including stable electromagnetic fields (H fields). In addition, the surface wave launcher may include a simple snap-on like installation for attaching the surface wave launcher to the power lines. In addition, the surface wave launcher may not interfere with power signals traversing the power lines and vice versa.

The surface wave launcher includes the technical features defined in claim 1.

The PCB may include a connector (e.g., a subminiature version A (SMA) connector) that is electrically coupled to the conductor pin. The conductor pin may receive the RF signal with the TEM mode. The surface wave launcher may convert the RF signal to the surface wave with the TM mode. The cylinder and the ground plates may form a transition from a coplanar structure to Goubau line structure. The surface wave may propagate the cylinder as it transitions to a Goubau line at the end of ground plates. In addition, the cylinder may launch the surface wave to the power line via electromagnetic coupling.

The surface wave launcher may include a support structure and clamps to simply and quickly install the surface wave launcher on the power lines. In addition, the loss compensation device may be physically positioned proximate a physical change in the power line and configured to compensate for loss due to the physical change of the power line.

Surface wave launchers described in the present disclosure may permit TEM mode to TM01 mode conversion. In addition, the surface wave launchers may provide a magnetic field pattern that is stable over broadband frequencies. Further, the surface wave launchers may prevent or reduce radiation at a line of sight (e.g., the surface wave launchers may prevent or reduce radiation of wireless signals within the broadband frequencies at the direction of propagation).

In addition, the surface wave launchers may prevent mechanical coupling (direct connection) between the cylinder and the power line. The mechanical isolation of the cylinder may prevent power signals that traverse the power line from causing interference of the surface wave on the cylinder. The mechanical isolation provided by the insulator may also protect the RF equipment/modem that is mechanically coupled or electrically coupled to the surface wave launcher. Further, the surface wave launchers may install quickly and without disconnecting the power line from the power poles. The surface wave launchers may be implemented as a transmitter (e.g., a launcher) or as a receiver. The surface wave launchers may be referred to in the present disclosure as a "surface wave receiver" or a "surface wave launcher," which may be used for both transmit and receive.

These and other aspects of the present disclosure will be explained with reference to the accompanying figures. It is to be understood that the figures are diagrammatic and schematic representations of such example aspects, and are not limiting, nor are they necessarily drawn to scale. In the figures, features with like numbers indicate like structure and function unless described otherwise.

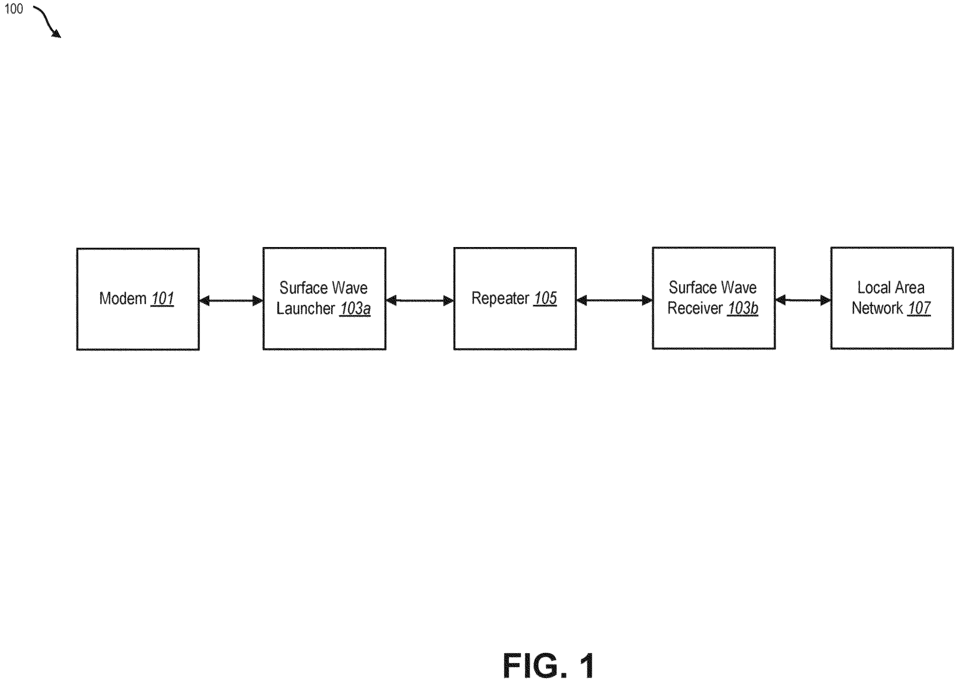

FIG. 1 illustrates a block diagram of an exemplary operational environment 100 to provide broadband connectivity over power lines, in accordance with at least one aspect described in the present disclosure. The environment 100 may include a modem 101, a surface wave launcher 103a, a repeater 105, a surface wave receiver 103b, and a LAN 107.

The modem 101 may generate a RF signal that includes data that is to be transmitted to the LAN 107. The surface wave launcher 103a may receive the RF signal. The RF signal may include a TEM mode. The surface wave launcher 103a may convert the RF signal to a surface wave with a TM mode. The surface wave launcher 103a may launch the surface wave representative of the RF signal on a power line that is between the surface wave launcher 103a and the repeater 105.

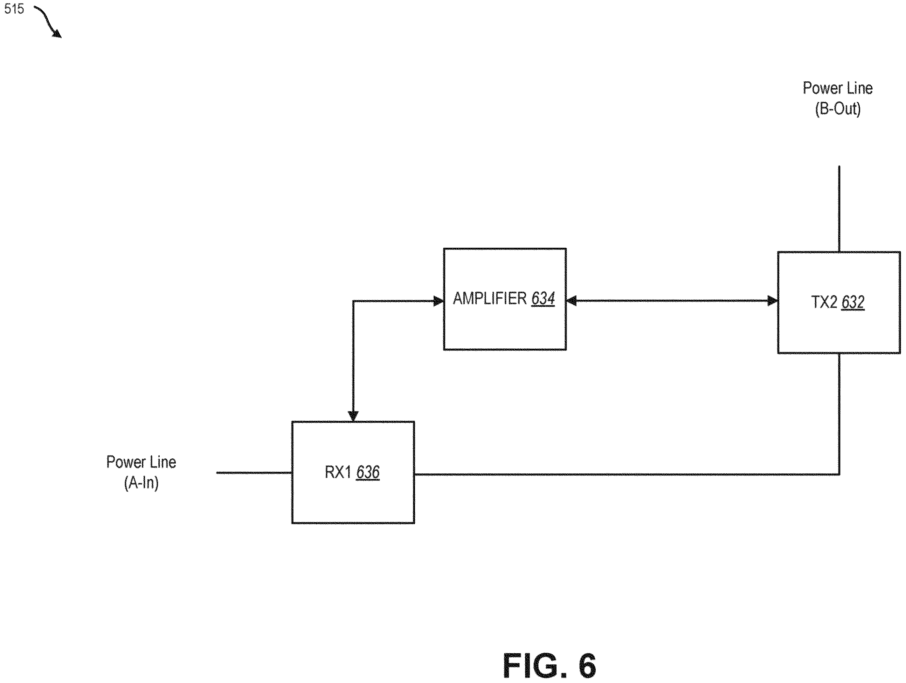

The repeater 105 may be configured to compensate for loss that occurs in the environment 100. For example, the power line may include loss (due to a bend, a break or a fork in the power line) or loss may occur due to converting the RF signal to the surface wave. The repeater 105 may include three components (not illustrated in FIG. 1). The repeater 105 may include a] a surface wave receiver, b] an amplifier, and c] a surface wave launcher. The repeater 105 including the various components is discussed in more detail below in relation to FIG. 6. The repeater 105 may receive the surface wave with the TM mode using the surface wave receiver within the repeater 105. The repeater 105 may convert the surface wave to another RF signal with the TEM mode. In addition, the repeater 105 may amplify the RF signal to compensate for the loss.

The repeater 105 may provide the amplified RF signal with the TEM mode to the surface wave launcher within the repeater 105. The surface wave launcher within the repeater 105 may receive the amplified RF signal with the TEM mode. The surface wave launcher within the repeater 105 may convert the amplified RF signal to another surface wave with the TM mode. The surface wave launcher within the repeater 105 may launch the surface wave representative of the amplified RF signal on the power line that is between the surface wave receiver within the repeater 105 and the surface wave receiver103b.

The LAN 107 may provide broadband connectivity (e.g., access to the Internet) to electronic devices (not illustrated in FIG. 1). For example, the surface wave receiver 103b may convert the surface wave to a wireless signal to permit the electronic devices to receive data within the surface wave.

The repeater 105 may be omitted and the surface wave launcher 103a and the surface wave receiver 103b may provide the wireless signal directly to the LAN 107. It is to be noted that the surface wave launcher 103a and the surface wave receiver 103b may be reciprocal and may include the same structure as each other.

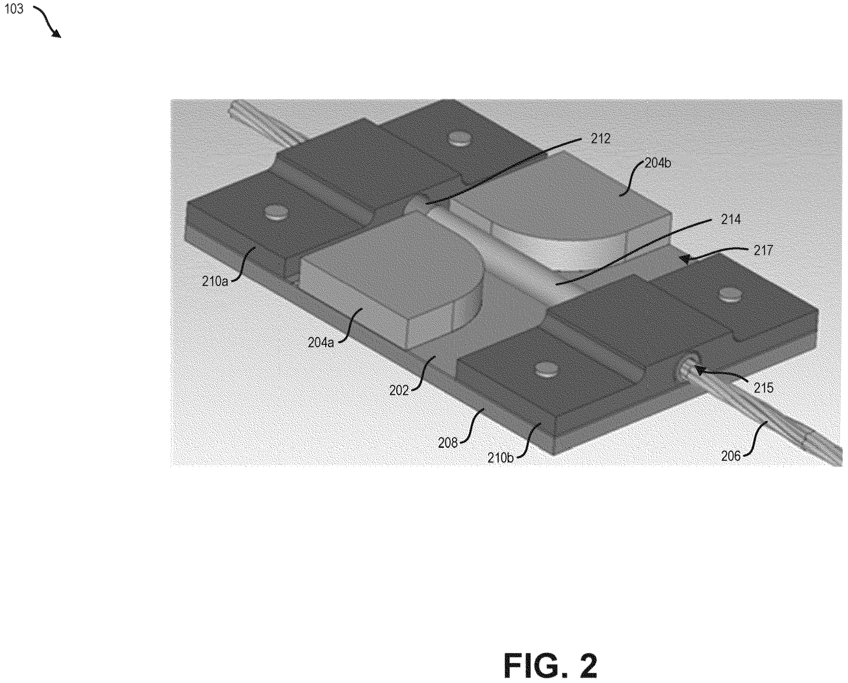

FIG. 2 illustrates an exemplary surface wave launcher 103 that may be implemented in the environment 100 of FIG. 1, in accordance with at least one aspect described in the present disclosure. The surface wave launcher 103 is illustrated in FIG. 2 as being in an assembled state. The discussion related to FIG. 2, is directed to when the surface wave launcher 103 is in the assembled state. The surface wave launcher 103 may include a PCB 202, a cylinder 214, an insulator 212, a first ground plate 204a, a second ground plate 204b, a support structure 208, a first clamp 210a, a second clamp 210b, or some combination thereof. The surface wave launcher 103 may operate within the Wi-Fi frequency band, the cellular frequency band, the 5G frequency band, or other frequency bands. The first ground plate 204a and the second ground plate 204b may form a ground plate structure.

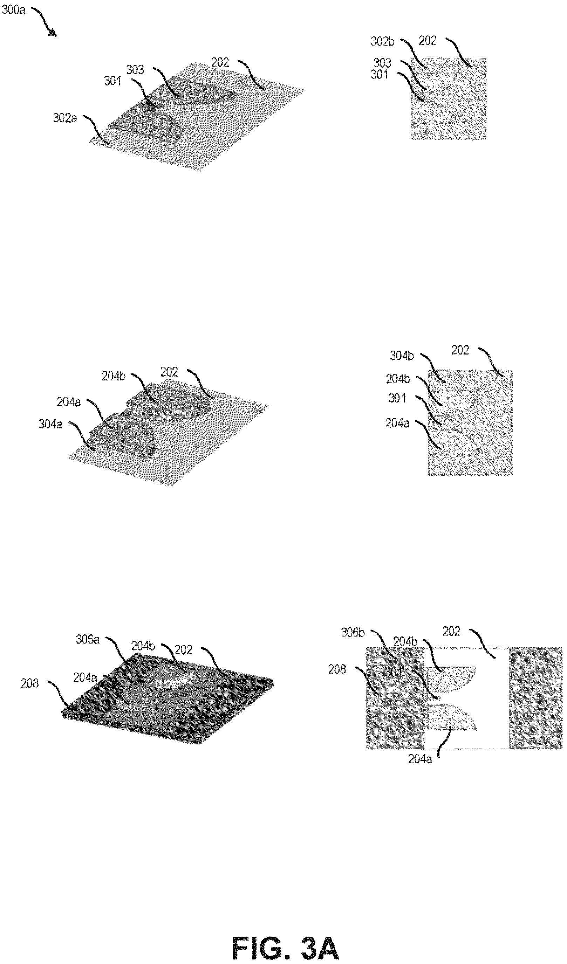

As illustrated in FIG. 2, the power line 206 may extend through the cylinder 214 and the insulator 212 from left to right (e.g., power signals and surface waves may traverse the power line from left to right). The PCB 202 may include a conductor pin (illustrated in FIG. 3A) and one or more ground pads (also illustrated in FIG. 3A). The cylinder 214 may be electrically coupled to the conductor pin. In addition, the cylinder 214 may define a cylinder opening 215. The power line 206 may extend through the cylinder opening 215.

The insulator 212 may be physically positioned between the power line 206 and the cylinder 214. In addition, at least a portion of the insulator 212 may be physically positioned within at least a portion of the cylinder opening 215. Further, the insulator 212 may be physically positioned between the power line 206 and the cylinder 214. The insulator 212 may mechanically isolate the cylinder 214 from the power line 206. In addition, the insulator 212 may permit the cylinder 214 to launch surface waves on the power line 206. Further, the insulator 212 may electrically isolate the cylinder 214 from power signals that traverse the power line 206. The insulator 212 may extended beyond the cylinder 214 to avoid possible arcing.

The ground plates 204a-b may be electrically coupled to the one or more ground pads on the PCB. In addition, the ground plates 204a-b may provide a ground reference for the conductor pin, the cylinder 214, or some combination thereof. In addition, the ground plates 204a-b may provide the ground reference for the conductor pin and the cylinder 214 without a ground wire electrically coupled between the surface wave launcher 103 and an external device (not illustrated in FIG. 2). The ground plates 204a-b may form a three-dimensional ground structure for the surface wave launcher 103.

The ground plates 204a-b may be physically shaped and positioned as flared ground plates that flare in a direction away from the cylinder 214. The ground plates 204a-b may flare in the direction away from the cylinder 214 on a plane that is substantially parallel to a surface 217 of the PCB 220. The first ground plate 204a may be physically positioned proximate the cylinder 214 on a first side of the cylinder 214. The second ground 204b may be physically positioned proximate the cylinder 214 on a second side of the cylinder 214. The second side of the cylinder 214 may be opposite the first side of the cylinder 214. The conductor pin (from the SMA connector) may be physically positioned proximate the cylinder 214 on a third side of the cylinder 214. The third side of the cylinder 214 may be on a plane that is orthogonal to a plane of the ground plates 204a-b. The third side of the cylinder 214 may be on a plane that is not parallel to a plane of the ground plates 204a-b.

The support structure 208 may be mechanically coupled to at least a portion of the PCB 202. In addition, the clamps 210a-b may attach to the support structure 208 to secure the cylinder 214, the insulator 212, the power line 206, or some combination in the positions as illustrated in FIG. 2.

The insulator 212 may surround the entire or a portion of the power line 206. The cylinder 214 may be physically positioned on a portion of an external surface of the insulator 212. The cylinder 214 may include a conductive material. The ground plates 204a-b may be physically positioned on both sides of the cylinder 214. The PCB 202 may be physically positioned proximate the bottom of the power line 206. The PCB 202 may include a rectangular shape. The support structure 208 may be physically positioned proximate the PCB 202. The support structure 208 and/or the clamps 210a-b may include a wooden/non-conductive material. The support structure 208 may provide support to the PCB 202. The support structure 208 and the clamps 210a-b may include a material that is treated to withstand an outdoor environment (such as rainy condition).

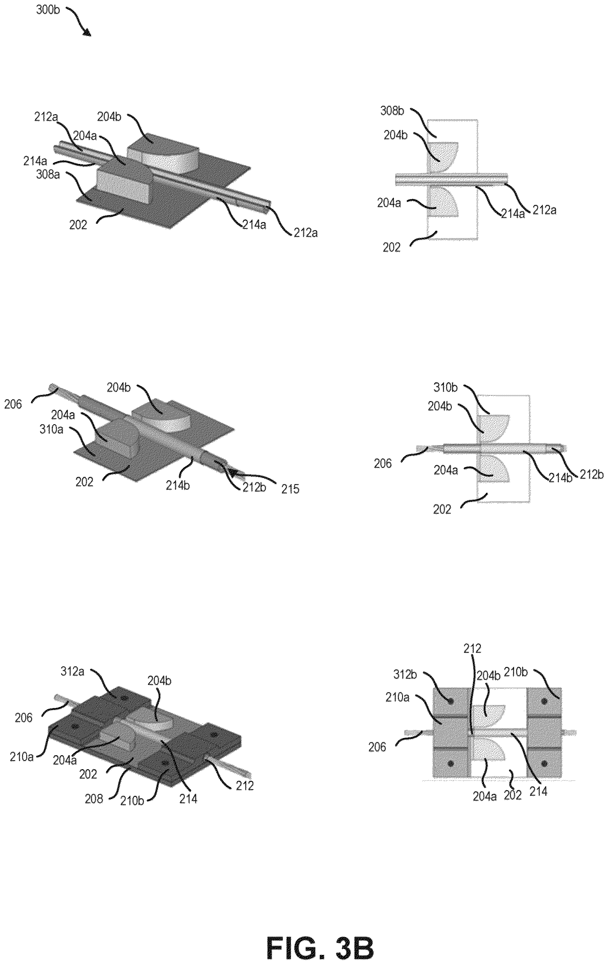

FIGS. 3A and 3B illustrate an exemplary method 300a-b of assembling the surface wave launcher 103 of FIG. 2, in accordance with at least one aspect described in the present disclosure. The PCB 202 including the conductor pin 301 (vertically coming from the back side) and the one or more ground pads 303 may be provided. A perspective view 302a and a top view 302b of the PCB 202 are illustrated in FIG. 3A.

The ground plates 204a-b may be physically positioned proximate the ground pads 303. The ground plates 204a-b may be electrically coupled to the ground pads 303. In addition, the ground plates 204a-b may be mechanically coupled to the PCB 202. The ground plates 204a-b may be physically positioned proximate the conductor pin 301. A perspective view 304a and a top view 304b of the PCB 202 with the ground plates 204a-b mounted are illustrated in FIG. 3A.

The PCB 202 may be physically positioned proximate the support structure 208. The support structure 208 may define an opening (not illustrated in FIG. 3A). The PCB 202 may be physically positioned relative to the opening of the support structure 208 such that the opening is proximate a back side of the PCB 202. A perspective view 306a and a top view 306b of the PCB 202 attached to the support structure 208 are illustrated in FIG. 3A.

A first portion of the cylinder 214a may be physically positioned relative the PCB 202 such that the conductor pin 301 and the first portion of the cylinder 214a are electrically coupled. In addition, the first portion of the cylinder 214a may be physically positioned proximate the ground plates 204a-b. The first portion of the cylinder 214a may be physically positioned proximate the ground plates 204a-b such that at least a portion of the first portion of the cylinder 214a is physically positioned between the ground plates 204a-b. A first portion of the insulator 212a may be physically positioned proximate the first portion of the cylinder 214a. The first portion of the insulator 212a may extend an entire length of the PCB 202 to avoid arcing between the power line 206 and any part of the PCB 202. A perspective view 308a and a top view 308b of the PCB 202 with the first portion of the cylinder 214a and the first portion of the insulator 212a are illustrated in FIG. 3B. The perspective view 308a and the top view 308b do not illustrate the support structure 208 for simplicity of illustration.

During installation, the PCB 202, the first portion of the cylinder 214a, and the first portion of the insulator 212a may be physically positioned relative the power line 206. The PCB 202, the first portion of the cylinder 214a, and the first portion of the insulator 212a may be physically positioned relative the power line 206 such that the first portion of the insulator 212a is physically positioned proximate the power line 206. A second portion of the insulator 212b may be physically positioned proximate the first portion of the insulator 212a and the power line 206. A second portion of the cylinder 214b may be physically positioned proximate the second portion of the insulator 212b such that the first portion of the cylinder 214a and the second portion of the cylinder 214b define the cylinder opening 215. At least a portion of the first portion of the insulator 212a and the second portion of the insulator 212b may be physically positioned within the cylinder opening 215. In addition, the power line 206 may extend through the cylinder opening 215. A perspective view 310a and a top view 310b of the PCB 202 with the second portion of the cylinder 214b and the second portion of the insulator 212b in the assembled state are illustrated in FIG. 3B.

During installation, the clamps 210a-b may be attached to the support structure 208. The clamps 210a-b may be attached to the support structure 208 such that at least a portion of the first portion of the cylinder 214a, the second portion of the cylinder 214b, the first portion of the insulator 212a, and the second portion of the insulator 212b are physically positioned between a portion of the clamps 210a-b and a portion of the support structure 208. The clamps 210a-b may be attached to the support structure 208 such that the second portion of the cylinder 214b physically contacts a portion of the first portion of the cylinder 214a and such that the second portion of the cylinder 214b is electrically coupled to the first portion of the cylinder 214a (e.g., forms the cylinder 214). The clamps 210a-b may be attached to the support structure 208 such that a portion of the second portion of the insulator 212b physically contacts a portion of the first portion of the insulator 212a and such that the first portion of the cylinder 212a and the second portion of the insulator 212b form the insulator 212.

In the assembled state, the clamps 210a-b may secure the insulator 212 between the cylinder 214 and a portion of the power line 206. The clamps 210a-b may ensure a physical proximity between the cylinder 214 and the conductor pin 301 is maintained to ensure electrical coupling between the cylinder 214 and the conductor pin 301. The clamps 210a-b may apply a compressive pressure to the cylinder to secure the insulator 212 between at least a portion of the cylinder 214 and a portion of the power line 206.

In the assembled state, the insulator 212 may be physically positioned proximate the power line 206 such that the cylinder 214 is mechanically isolated from the power line 206. In addition, the insulator 212 may be physically positioned proximate the power line 206 such that the cylinder 214 is electrically isolated from power signals that traverse the power line 206. A perspective view 312a and a top view 312b of the assembled structure in the assembled state are illustrated in FIG. 3B.

The PCB 202 may include a SMA connector or any other appropriate RF connector at the back side (not illustrated in FIGs. 3A and 3B). A center conductor of the SMA connector may be electrically coupled to the conductor pin 301. A ground portion of the SMA connector may be electrically coupled to the ground pad 303 and subsequently the ground plates 204a-b.

During installation, the assembled structure may be physically positioned proximate a power pole and may include a mechanical support that is mechanically coupled to the power pole. PCB ground plates may be screwed to the PCB 202 and they may be soldered to the ground pads on the PCB 202. In addition, a copper adhesive tape may electrically couple the conductor pin 301 to the cylinder 214.

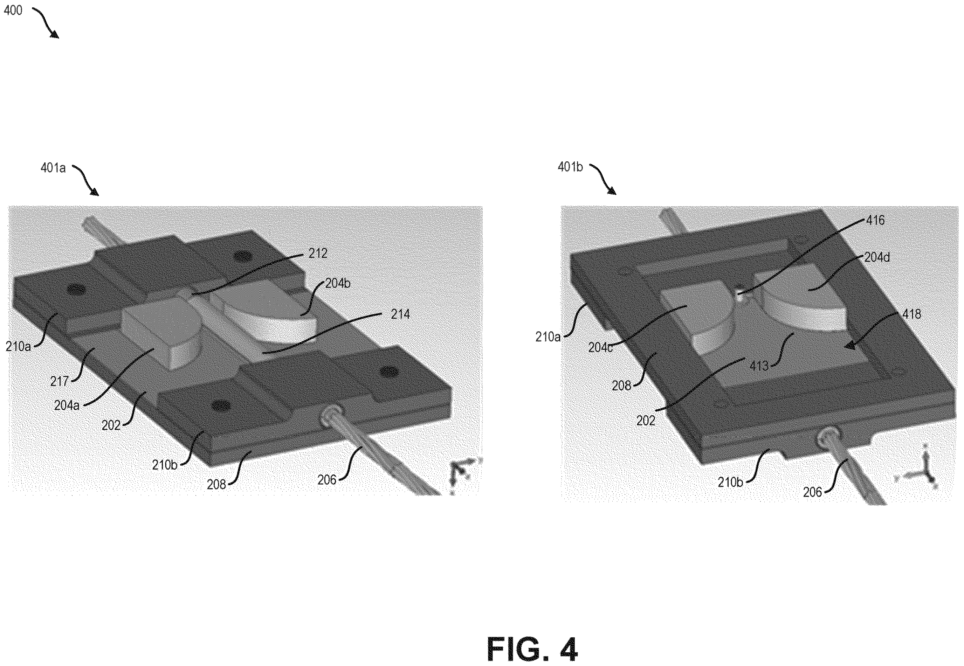

FIG. 4 illustrates an exemplary surface wave launcher 400a-b that may be implemented in the environment 100 of FIG. 1, in accordance with at least one aspect described in the present disclosure. The surface wave launcher 103 is illustrated in FIG. 4 as being in the assembled state. The discussion related to FIG. 4, is directed to when the surface wave launcher 103 is in the assembled state. The surface wave launcher 400 may correspond to the surface wave launcher 103 described in the present disclosure. A top perspective view 401a and a bottom perspective view 401b of the surface wave launcher 400 are illustrated in FIG. 4.

The ground plates 204a-b, the cylinder 214, and the insulator 212 may be physically positioned proximate the first surface 217 of the PCB 202. Additional ground plates 204c-d and a RF connector 416 may be physically positioned proximate and attached to a second surface 413 of the PCB 202. The RF connector 416 may be configured to mechanically and electrically couple to a cable to receive or send RF signals. The second surface 413 of the PCB 202 may be physically positioned proximate an opening 418 defined by the support structure 208.

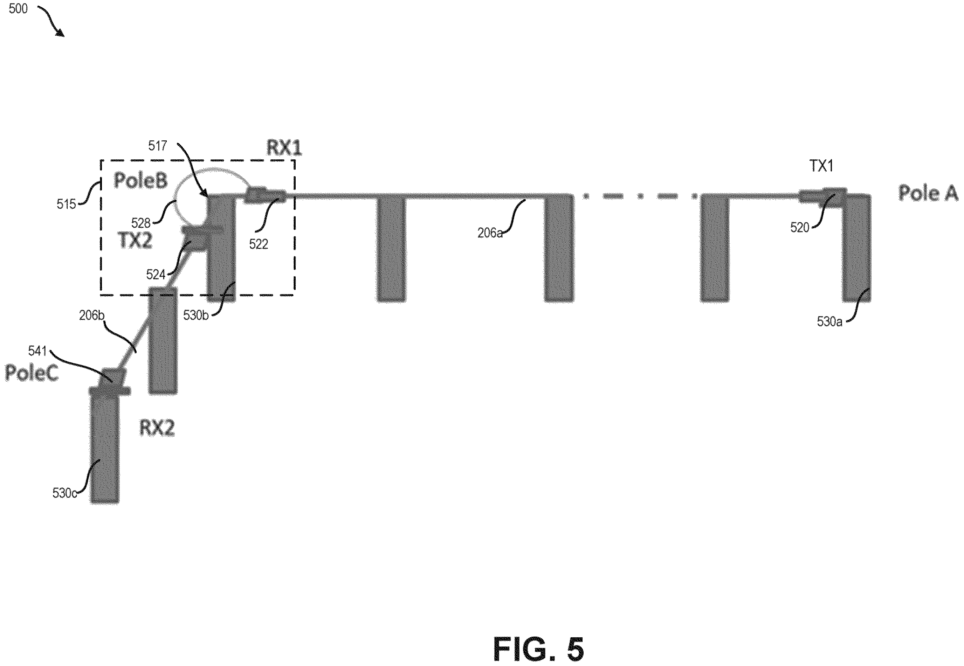

FIG. 5 illustrates a block diagram of an exemplary operational environment 500 to provide data links over power lines 206a-b, in accordance with at least one aspect described in the present disclosure. As illustrated in FIG. 5, the power lines 206a-b connect various power poles 530a-c. As illustrated in FIG. 5, the power lines 206a-b may include a physical change 517 proximate the second power pole 530b.

The environment 500 may include a first surface wave launcher (transmitter) 520, a loss compensation device 515, and a second surface wave receiver 541. The first surface wave launcher (transmitter) 520 may be physically positioned proximate the power line 206a. The first surface wave launcher (transmitter) 520 may launch a surface wave on the power line 206a. The loss compensation device 515 may be physically positioned proximate the physical change 517. The loss compensation device 515 may include a cable 528, a first surface wave receiver 522, and a second surface wave launcher (transmitter) 524. The first surface wave receiver 522 may be physically positioned proximate the power line 206a on a first side of the physical change 517. The second surface wave launcher (transmitter) 524 may be physically positioned proximate the power line 206b on a second side of the physical change 517.

The first surface wave launcher (transmitter) 520 may launch the surface wave on the power line 206a proximate the first power pole 530a. The first surface wave receiver 522 may receive the surface wave with the TM mode and may convert the surface wave to a RF signal with the TEM mode. The RF signal with the TEM mode may traverse the cable 528. The RF signal may traverse the cable to bypass the physical change 517 (e.g., to avoid loss in the power lines 206a-b due to the physical change 517). The second surface wave launcher (transmitter) 524 may receive the RF signal with the TEM mode and convert it to a surface wave with the TM mode. The second surface wave launcher (transmitter) 524 may launch the surface wave on the power line 206 downstream of the physical change 517. The second surface wave receiver 541 may receive the surface wave and convert the surface to a RF signal with the TEM mode.

The first surface wave launcher (transmitter) 520 may correspond to the surface wave launcher 103a of FIG. 2 or FIG. 4. The loss compensation structure 515 (the surface wave receiver 522, the cable 528, and the second surface wave launcher (transmitter) 524) may correspond to the repeater 105 of FIG. 1. The second surface wave receiver 541 may correspond to the surface wave receiver 103b of FIG. 2 or FIG. 4.

FIG. 6 illustrates an exemplary loss compensation device 515 that may be implemented in the environment 500 of FIG. 5, in accordance with at least one aspect described in the present disclosure. The loss compensation device 515 may include a surface wave receiver 636, an amplifier 634, and a surface wave launcher (transmitter) 632. As illustrated in FIG. 6, the power line directly between the receiver 636 and the transmitter 632 may include a bend or a fork or any other discontinuity. That discontinuity may create loss of surface waves.

To compensate for the loss due to the physical change in the power line, the receiver 636 may convert surface waves to RF signals. The receiver 636 may provide the RF signals to the amplifier 634. The amplifier 634 may amplify the RF signals. The amplifier 634 may amplify the RF signals to compensate for loss due to the receiver 636 converting the surface wave with the TM mode to the RF signal with the TEM mode. In addition, the amplifier 634 may compensate for the surface wave launcher (transmitter) 632 converting the RF signal with the TEM mode to the surface wave with the TM mode. The amplifier 634 may provide the amplified RF signal to the surface wave launcher (transmitter) 632 after the physical change in the power line. The surface wave launcher (transmitter) 632 may convert the amplified RF signal to the surface wave with the TM mode. The surface wave launcher (transmitter) 632 may launch the surface wave on the power line downstream of the physical change in the power line. The amplifier 634 may amplify the RF signal at the Wi-Fi frequency band (e.g., 2.4GHz/five GHz), the cellular frequency band, the 5G frequency band, or whichever frequency band is applicable to the surface wave launcher.

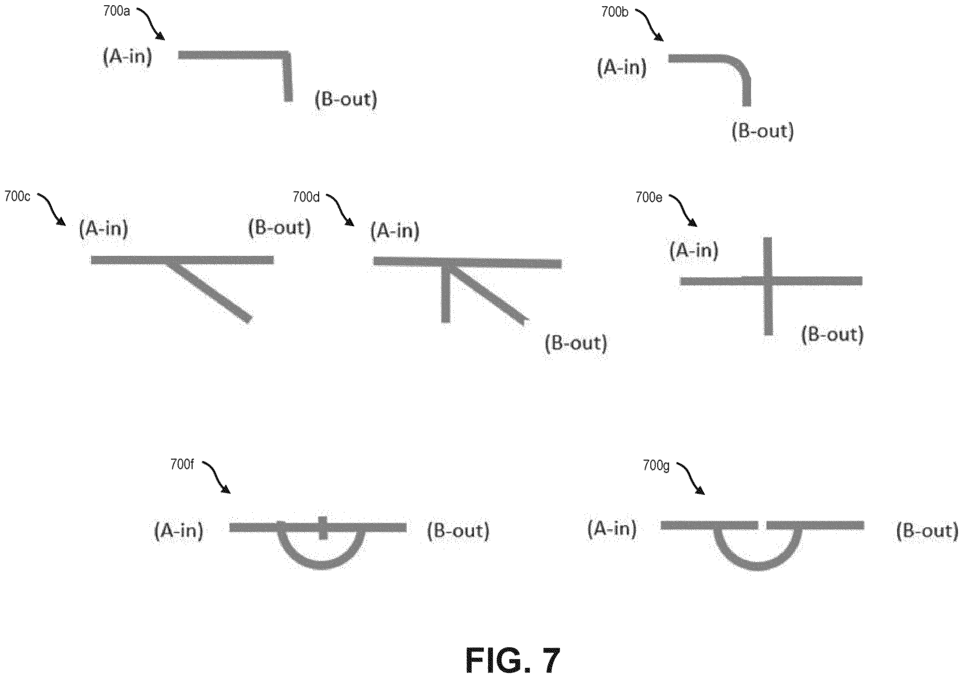

FIG. 7 illustrate exemplary physical changes in the power lines 206a-b that may occur in the environment 500 of FIG. 5, in accordance with at least one aspect described in the present disclosure. The physical changes may include a sharp bend 700a, a gradual bend 700b, fork topologies 700c-e, a second cable at a joint 700f, or a break 700g.

The loss compensation device 515 may include the surface wave receiver 522 physically positioned at points A (e.g., A-in) upstream of the physical change and a transmitter (e.g., the surface wave launcher (transmitter) 524) physically positioned at points B (e.g., B-out) downstream of the physical change as shown in FIG. 6. In addition, the loss compensation device 515 may include the surface wave receiver 522 physically positioned at points A (e.g., A-in) and the surface wave launcher (transmitter) 524 positioned at points B (e.g., B-out) and a second transmitter (e.g., the surface wave launcher (transmitter) 524) physically positioned on the different topologies shown in FIG. 7.

The fork topologies 700c-e may include intersections of multiple power lines. For the second cable at a joint topology 700f, surface waves may deteriorate due to the multiple cable intersections. The second cable at a joint topology 700f may include an additional cable at the j oint. In the break configuration 700g, degradation of the surface waves may occur. For all these topologies the loss compensation device may be placed from point A (A-in) to point B (B-out) to bypass the intersections.

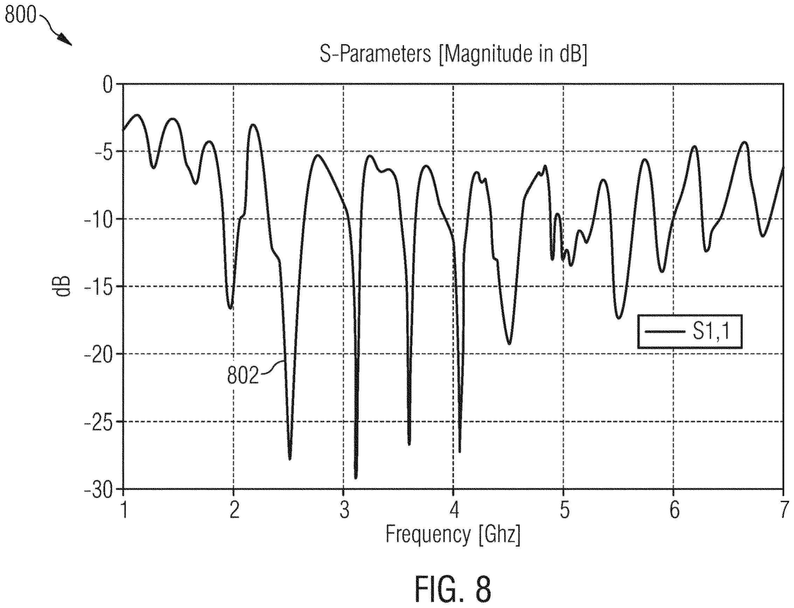

FIG. 8 illustrates a graphical representation 800 of a simulation of return loss for the surface wave launcher 103 of FIG. 2, in accordance with at least one aspect described in the present disclosure. For the simulation, the surface wave launcher 103 of FIG. 2 was simulated using 3D Electromagnetic Solver. Curve 802 illustrates the measured return loss of the surface wave launcher 103. The curve 802 indicates a return loss (in the broadband frequency band) occurs without major oscillations. During the simulation, the return loss in the Wi-Fi band of 5GHz the return loss was measured below -5 decibels (dB) and reaches -10dB.

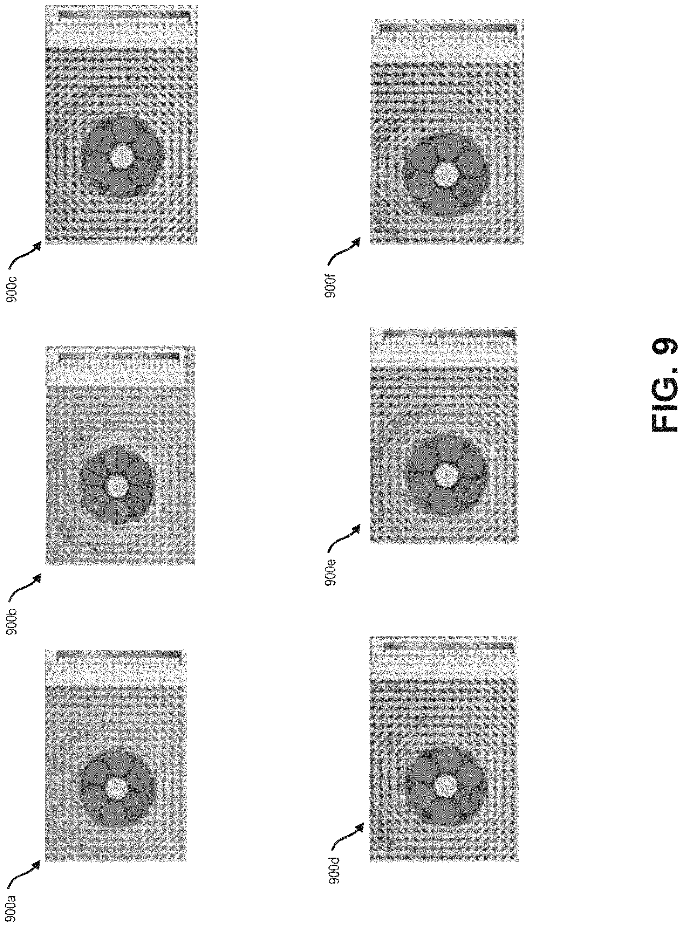

FIG. 9 illustrates graphical representations 900a-f of simulations of H fields of the surface wave launcher 103 of FIG. 2 at various frequencies, in accordance with at least one aspect described in the present disclosure. As illustrated in the graphical representations 900a-f, as the frequency changes, the H fields include a stable TMO1 mode pattern. Graphical representation 900a illustrates the H field of the surface wave launcher 103 at one GHz. Graphical representation 900b illustrates the H field of the surface wave launcher 103 at two GHz. Graphical representation 900c illustrates the H field of the surface wave launcher 103 at three GHz. Graphical representation 900d illustrates the H field of the surface wave launcher 103 at four GHz. Graphical representation 900e illustrates the H field of the surface wave launcher 103 at 5.5 GHz. Graphical representation 900f illustrates the H field of the surface wave launcher 103 at six GHz. As shown in FIG. 9 from one GHz to six GHz, the H field pattern may be stable.

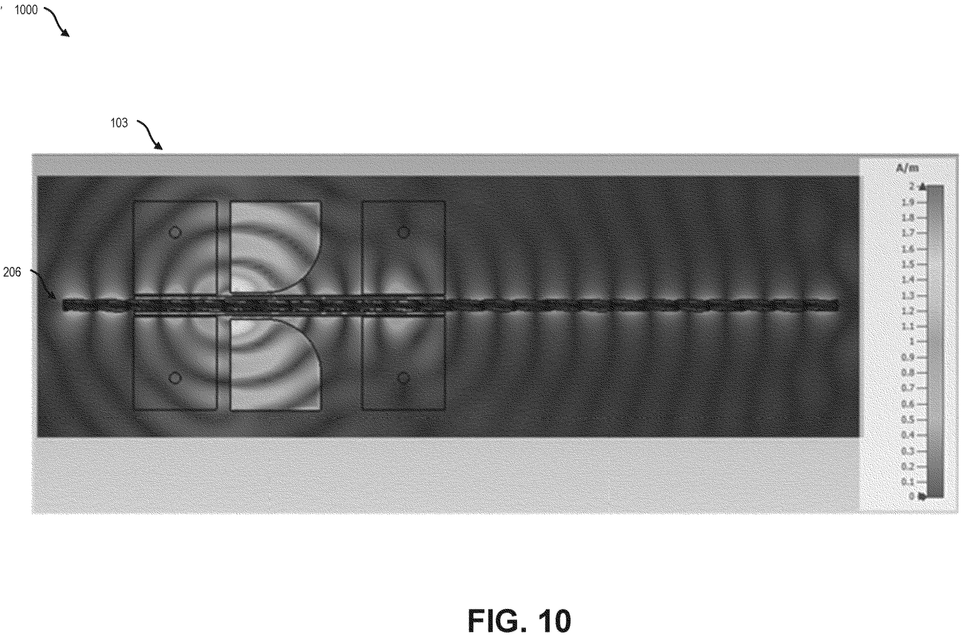

FIG. 10 illustrates a graphical representation 1000 of a simulation of surface currents for the surface wave launcher 103 and the power line 206 of FIG. 2, in accordance with at least one aspect described in the present disclosure. As illustrated in the graphical representation 1000, the surface currents traverse the power line 206 in directions away from the surface wave launcher 103, on a surface of the power line.

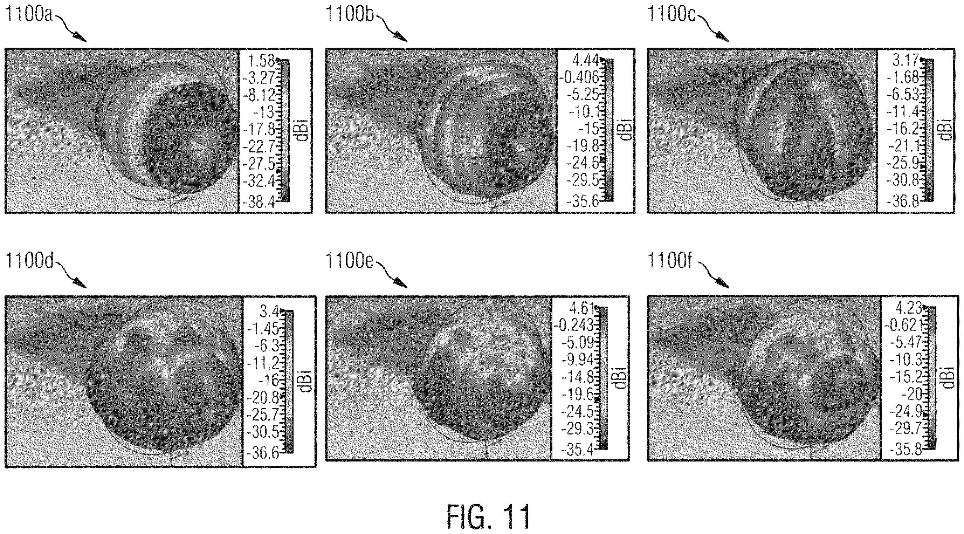

FIG. 11 illustrates graphical representations 1100a-f of simulations of radiation patterns of the surface wave launcher 103 of FIG. 2 at various frequencies, in accordance with at least one aspect described in the present disclosure. As illustrated in FIG. 11, a null or reduced radiation at line of sight for broadband frequencies (e.g., one to six GHz) exists for the surface wave launcher 103. A lower radiation rate indicates more power is transferred to the surface wave propagation on the power lines.

Graphical representation 1 100a illustrates the radiation pattern of the surface wave launcher 103 at one GHz. Graphical representation 1100b illustrates the radiation pattern of the surface wave launcher 103 at two GHz. Graphical representation 1100c illustrates the radiation pattern of the surface wave launcher 103 at three GHz. Graphical representation 1 100d illustrates the radiation pattern of the surface wave launcher 103 at four GHz. Graphical representation 1100e illustrates the radiation pattern of the surface wave launcher 103 at 5.5 GHz. Graphical representation 1100f illustrates the radiation pattern of the surface wave launcher 103 at six GHz.

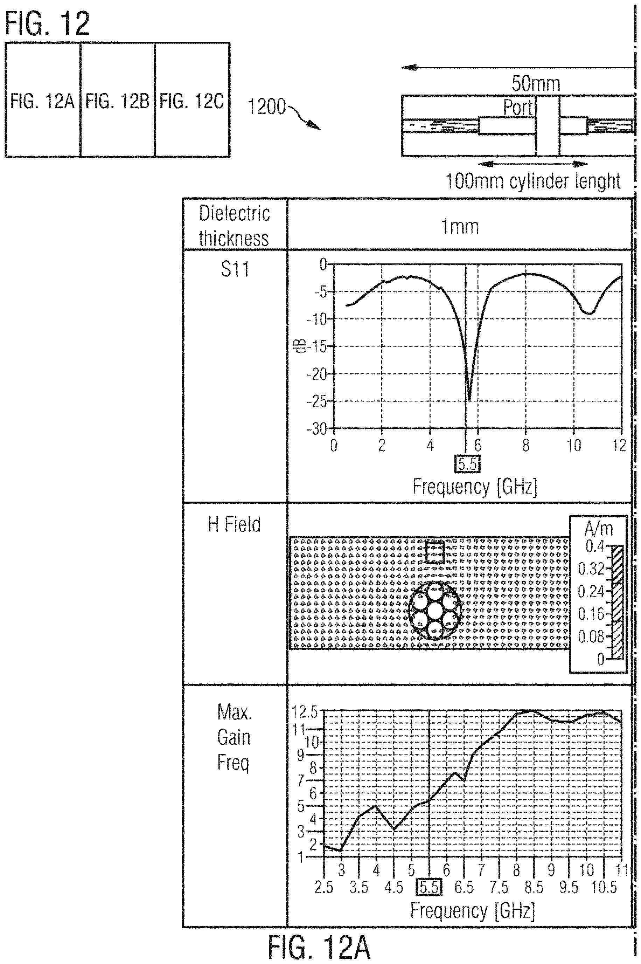

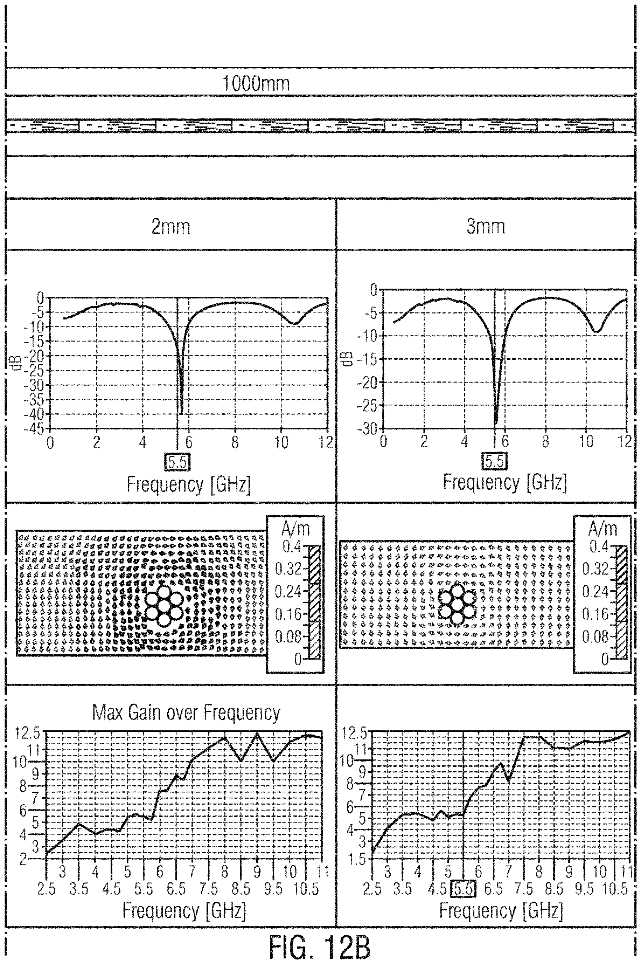

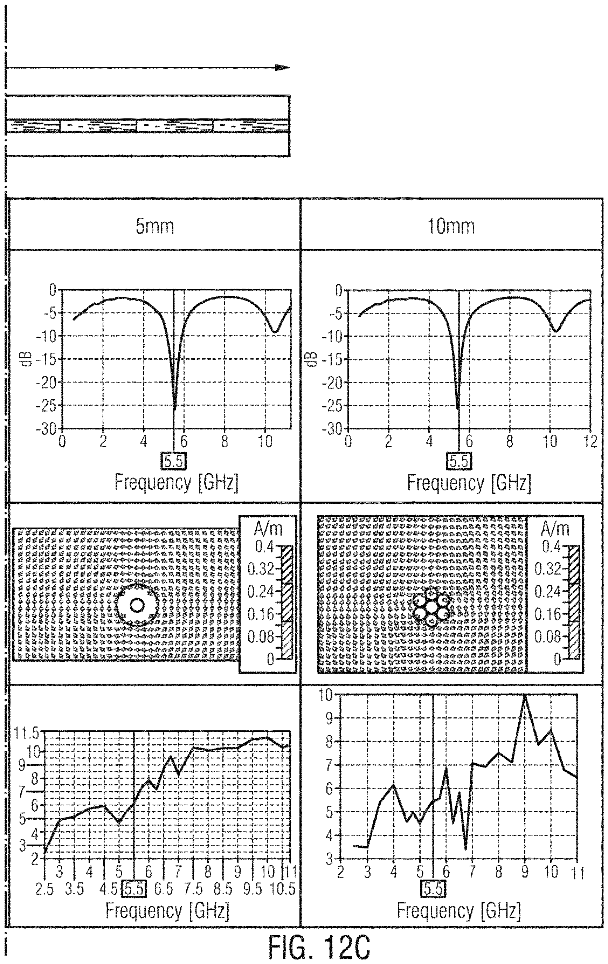

FIG. 12 illustrates a graphical representation 1200 of simulations of return loss, H Field, and max gain vs. frequency of the surface wave launcher 103 of FIG. 2 with various thicknesses of the insulator 212, in accordance with at least one aspect described in the present disclosure. The graphical representation 1200 illustrates that as the thickness of the insulator 212 changes between one millimeter (mm); two mm; three mm; five mm; and ten mm, the return loss; the H Field; and the max gain vs. frequency of the surface wave launcher 103 changes.

Based on the graphical representation 1200, the insulator with a thickness around two mm, provides the best ratings of the H field and the return loss versus the other thicknesses. The example thickness of the insulator of around two mm is just for illustrative purposes to show the impact of insulation thickness on performance of the surface wave launcher. The insulator may include different types of materials and the thickness of the insulator may differ based on the electrical properties of the different materials, a frequency of operation, and the structure dimensions.

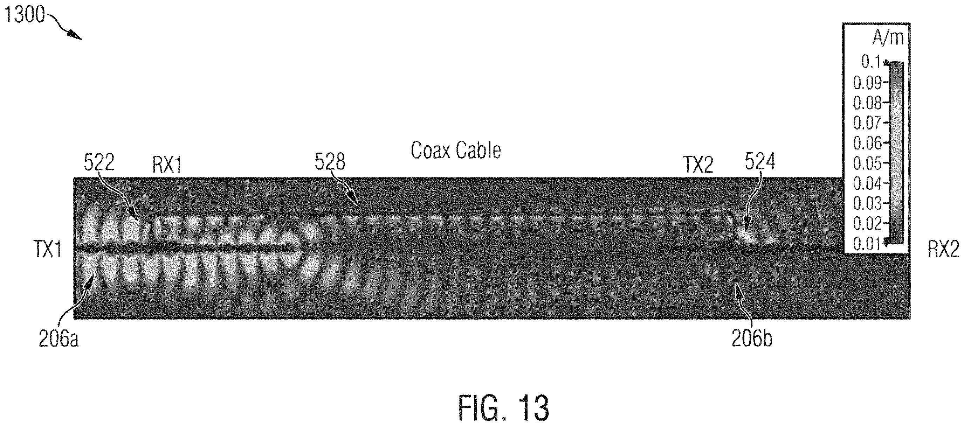

FIG. 13 illustrates a graphical representation 1300 of a simulation of surface currents for the surface wave launcher 103 and the power line 206a-b, in accordance with at least one aspect described in the present disclosure. Surface waves may traverse from left to right in FIG. 13. The power line 206a-b may include an improper connection or other physical change (e.g., a bend/break/fork). Surface waves may not traverse the entire power line 206a-b due to the physical change. In FIG. 13, the surface wave receiver 522 is physically positioned upstream of the physical change and the surface wave launcher (transmitter) 524 is physically positioned downstream of the physical change. The surface wave receiver 522 may convert the surface waves with TM mode to RF signals with TEM mode. A coaxial cable 528 may propagate the RF signals with the TEM mode and provide the RF signals to the surface wave launcher (transmitter) 524. Downstream of the physical change, the surface wave launcher (transmitter) 524 may convert the RF signal to the surface wave with the TM mode and launch the surface wave downstream the physical change. As illustrated in FIG. 13, a reduced surface current proximate the coaxial cable 528 and increased surface currents upstream and downstream the physical change indicates the surface wave does not traverse the physical change well.

The surface wave launcher 103 described in the present disclosure may be configured to be in the assembled state or a disassembled state. The discussion related to FIGs. 2 and 4 are directed to the surface wave launcher 103 in the assembled state. In addition, the assembled state may include an installed state in which the surface wave launcher 103 is installed on the power line.

In the disassembled state, the surface wave launcher 103 may include multiple components that are not mechanically or electrically coupled to each other. For example, the cylinder may be mechanically coupled to or separated from the PCB, the clamps, or other components of the surface wave launcher 103. As another example, the insulator may be mechanically coupled to or separated from the cylinder or other components of the surface wave launcher 103. As yet another example, the insulator may be mechanically separated from the power line.

A surface wave launcher that includes a three-dimensional flared patch may launch a surface wave on power lines. The surface wave launcher may be wrapped around the power line. The surface wave launcher may include an insulator and a cylinder. In an assembled state, the insulator may be physically positioned between the power line and the cylinder. The insulator may prevent the power line from contacting the cylinder or any part of the surface wave launcher.

The surface wave launcher may include a conductor pin that is electrically coupled to the cylinder. The conductor pin may receive a RF signal with a TEM mode from the SMA/RF connector. In addition, the surface wave launcher may convert the RF signal to the surface wave with a TM mode. The cylinder and the ground plates may form a coplanar Goubau line and at the end of the plates form a Goubau line structure and may produce the surface wave and launch the surface wave on the power line that extends through a cylinder opening defined by the cylinder. The cylinder may launch the surface wave on power lines via electromagnetic coupling. Dimensions of the insulator may be such that that the coupling from the cylinder to the power line is maximized.

One or more loss compensation devices may compensate for loss that occurs due to a physical change in the power lines. For example, a power line may include significant loss when there is a bend, a break, or a fork in the power line. The loss compensation devices may compensate for the loss due to the physical change in the power line.

A Wi-Fi modem may operate in Wi-Fi frequency bands (e.g., 2.4GHz/five GHz/or Wi-Fi extended band six GHz). The Wi-Fi modem may provide a RF signal to the surface wave launcher. The Wi-Fi modem may be electrically coupled to the surface wave launcher via a cable and a RF connector of the surface wave launcher. The RF connecter may propagate the RF signal to a conductor pin of the surface wave launcher. In addition, a ground portion of the RF connector may be electrically coupled to a ground pad of the surface wave launcher. The ground pad may be electrically coupled to ground plates that create a ground reference for the surface wave launcher. The ground plates may create a 3D coplanar structure in which the cylinder forms a center conductor and the ground plates are flared 3D ground plates.

In the assembled state, the cylinder may be electrically isolated from power signals that traverse the power line by the insulator. The cylinder may be wirelessly coupled to the power line via electromagnetic coupling. Further, the surface wave launcher may convert the RF signal to the surface wave with the TM mode. The conductor pin may be electrically coupled to the cylinder. The cylinder may launch the surface wave on the power line via the electromagnetic coupling.

The surface wave launcher may launch the surface wave using TEM to TM01 mode conversion with a broadband stable H field response, null or lower radiation at LOS, or some combination thereof.

Table I illustrates the surface wave launcher described in the present disclosure versus other power line technologies.

**TABLE I**

| | Surface Wave Launcher described in the Present Disclosure | Technology 1 | Technology 2 | Technology 3 | Technology 4 |
|---|---|---|---|---|---|
| Power line and center conductor | Power line extends through cylinder coupling via EM waves | Power line extends through, cylinder coupler via EM waves | Power line extends through, cylinder coupler via EM waves | End to end SMA connection, direct connection | End to end SMA connection, direct connection |
| Ground | Flared 3D ground | Conical flared structure | Planar PCB Ground | Flared 2D planar ground for broadband impedance | Flared Gaussian ground for broadband impedance |
| Materials | 2.5 mm thick Porcelain Insulator. Polytetrafluoroethylene (PTFE) for PCB. | PTFE insulating material | Two mm thick polyethylene material | No insulation material is used. PTFE is used for PCB | No dielectric material. |
| Other: | Broad band impedance, stable H field over frequency band one to seven GHz. Null at line of sight over the frequency band. | Generate narrow band H field with directional radiation at line of sight over the frequency band. | Low frequency application. | Broad band frequency, stable H field. Surface wave properties degrades when power line pass through. | Broad band frequency, stable H field. Surface wave properties degrades when power line pass through. |

Some surface wave launcher technologies may include a cone/horn type launcher. In addition, some surface wave launcher technologies may include a cone/horn piece implemented as a ground structure/reference. These surface wave launcher technologies may include a cylinder that is in direct contact with the power line. Power signals that traverse the power lines may include a voltage up to eleven kilovolts (kV). The direct connection between the cylinder and the power lines may be hazardous for the cylinder or other components of the surface wave launcher.

Some surface wave launcher technologies may include an insulator between the cylinder and the ground references. These surface wave launcher technologies may include a multi-folded ground. Further, some surface wave launchers may include a slit in the cylinder to attach the surface wave launcher to the power line. Some surface wave launcher technologies may be configured to operate in a terahertz frequency range. In addition, some surface wave launcher technologies may implement a planar Goubau line (PGL) structure and the power line may not extend through an opening defined by the surface wave launcher. These surface wave technologies may include a two-dimensional ground structure or a Gaussian ground structure.

The surface wave launcher described in the present disclosure may be referred to as a 3D flared patch launcher. The surface wave launcher described in the present disclosure may operate for broadband surface waves, which may increase throughput of the surface wave launcher. The surface wave launcher described in the present disclosure may form a portion of a loss compensation device to compensate for loss in power lines due to bends, breaks, forks, or some combination thereof.

The surface wave launcher, in the assembled state, may couple the cylinder to the power line via electromagnetic coupling while the cylinder is mechanically isolated from the power line by the insulator. The insulator may be configured for high voltage levels. In the assembled state, the insulator of the surface wave launcher may be physically positioned between the power line and the cylinder. The insulator may include a ceramic material (e.g., porcelain, alumina, zirconia), Reinforced Polymer or Composite Polymer material, silicone polyimide material, silicone rubber material, silicon elastomer material, or some combination thereof. In addition, the ground structure of the surface wave launcher may not be continuous. Further, the cylinder of the surface wave launcher may not include a slit in the cylinder so as to permit higher frequency signals to propagate the cylinder.

A Goubau Line (GL) may include a single wire transmission line. The surface wave launcher may include a GL structure without losing surface wave characteristics by permitting the power line to extend through the cylinder. In addition, the surface wave launcher may include a snap on installation process. The 3D flared ground structure may enhance the H field while reducing surface wave propagation in a back side of the surface wave launcher.

A surface wave launcher may include a PCB. The PCB may include a conductor pin. The conductor pin may be coupled to the RF connector. The PCB may also include one or more ground pads. The surface wave launcher may also include a cylinder. In the assembled state, the cylinder may be electrically coupled to the conductor pin. In the assembled state, the cylinder may also define a cylinder opening. The cylinder and ground plates may form a transition from planar to GL structure and may propagate the surface wave. The surface wave launcher may include an insulator. In the assembled state, the insulator may be physically positioned within at least a portion of the cylinder opening. In addition, in the assembled state, the insulator may be physically positioned between the cylinder and a portion of a power line that extends through the cylinder opening. In the assembled state, the insulator may mechanically isolate the cylinder from the power line and may extended beyond the cylinder in both directions. In addition, the insulator may permit the cylinder to launch the surface wave on the power line. The surface wave launcher may also include one or more ground plates (e.g., a ground plate structure). The one or more ground plates may be electrically coupled to the one or more ground pads. The one or more ground plates may provide a ground reference for the conductor pin and the cylinder. The conductor pin and the cylinder, in the assembled state, may be physically positioned proximate the one or more ground plates. There may be ground pads and plates at the back side of the PCB. The front side and back side ground pads and plates may be electrically coupled together.

The flaring up of the ground plates may improve impedance matching of the surface wave launcher. The conductor pin may receive a RF signal with a TEM mode. The surface wave launcher may convert the RF signal to the surface wave with a TM mode.

The surface wave launcher may also include a platform device. In the assembled state, the platform device may be mechanically coupled to at least a portion of the PCB. The platform device may include a non-conductive material with a dielectric constant close to that of the air. In these and other aspects. For example, the platform device may include a wood material.

The platform device may include a support structure and one or more clamps. In the assembled state, the one or more clamps may attach to the support structure. In addition, in the assembled state, the one or more clamps may apply a pressure to the cylinder to secure the insulator between at least a portion of the cylinder and a portion of the power line. Further, in the assembled state, the one or more clamps may apply a pressure to the cylinder to maintain a proximity between the cylinder and the conductor pin to maintain electrical coupling of the cylinder and the conductor pin.

The surface wave launcher may also include a RF connector (e.g., a SMA connector). The RF connector may include a center pin electrically coupled to the conductor pin. The RF connector may also include a ground portion. The ground portion may be electrically coupled to the ground pads. The RC connector may mechanically couple and electrically couple to a cable to receive RF signals.

The insulator, in the assembled state, may electrically isolate the cylinder from power signals that traverse the power line. The cylinder may launch the surface wave on the power line via electromagnetic coupling between the cylinder and the power line. The cylinder and the insulator may include a mechanical snap-on assembly for cylindrical surface conductor as well as the insulator.

The one or more ground plates may be shaped as flared ground plates. The one or more ground plates may flare in a direction away from the cylinder. The one or more ground plates may include a flared-up structure and a 3D structure on the PCB. In the assembled state, the one or more ground plates may flare in the direction away from the cylinder on a plane that is substantially parallel to a surface of the PCB. The one or more ground plates may form a three-dimensional ground structure for the surface wave launcher. The one or more ground plates may provide the ground reference for the conductor pin and the cylinder without a ground wire electrically coupled between the surface wave launcher and an external device.

The one or more ground plates may include a first plate physically positioned proximate the cylinder on a first side of the cylinder, in the assembled state. The one or more ground plates may also include a second ground plate physically positioned proximate the cylinder on a second side of the cylinder that is opposite the first side, in the assembled state.

The first ground plate and the second ground plate may be physically positioned proximate a first surface of the PCB. The one or more ground plates may also include a third ground plate and a fourth ground plate physically positioned proximate a second surface of the PCB. The third ground plate and the fourth ground plate may enhance the surface wave propagation in the forward direction. The surface wave propagation may be further enhanced by constructing 3D vertical flared ground plates. The thickness of the ground plates may be adjusted to maximize the surface wave propagation in the desired direction. The first ground plate, the second ground plate, the third ground plate, the fourth ground plate, or some combination thereof may form the ground plate structure.

The conductor pin may be physically positioned proximate the cylinder on a third side on a plane that is orthogonal to a plane of the ground plates, in the assembled state. The conductor pin may be physically positioned proximate the cylinder on a third side on a plane that is not parallel to a plane of the ground plates, in the assembled state.

The insulator may include a material that includes a thickness between two millimeters and twelve millimeters. The thickness of the insulator may vary for performance variations. The insulator may withstand high voltage (eleven kV) power line energy and may not break down over time. The insulator may also withstand an outdoor environment in all seasons. One such material is porcelain which is a type of ceramic material.

The insulator may include a ceramic material. For example, the insulator may include at least one of a porcelain material, a Zirconia material, and an Alumina material. A breakdown voltage for porcelain material may be around five to six kV/mm. For eleven kV power lines, the insulator thickness may be around 2.2 mm. Other materials may include alumina, zirconia, Fiber Reinforced Polymer (FRP), composite polymer, silicone polyimide material, silicone rubber material, and silicone elastomer material.

The thickness of the insulator may vary based on the material of the insulator. If a different type of ceramic material is used, then the dielectric withstanding capability can be different. Alumina and Zirconia may include a higher dielectric withstanding capability. Thickness of the insulator may be selected based on the high voltage the insulator is to withstand. For example, if the power line is carrying thirty-three kV, then a three mm thickness of Alumina or Zirconia material may be used.

At least a portion of the PCB may include a PTFE material. The surface wave launcher may operate within Wi-Fi frequency bands.

The surface wave launcher, when assembled, may be configured to be physically positioned within an interior volume defined by an enclosure. For example, the entire structure of the surface wave launcher, when assembled, may be physically positioned in an enclosure or a box so as to protect the surface wave launcher from the outdoor environment. The enclosure may include a non-conductive material with a dielectric constant close to that of air. The enclosure may provide enough clearance from the power line to extend through the enclosure. This enclosure may receive mechanical support from the power pole. The enclosure may provide enough clearance to adjacent power lines.

A loss compensation device may compensate for loss in the power line due to breaks, bends, or forks in the power line. For example, a change of direction of the power line may create a sharp angle. As another example, a break may exist in the power line or the power line may terminate at a power pole and another power line may start at the power pole and situated at an angle. As yet another example, a small cable joining two continuous power lines may be present. Alternatively, the power line may include a bend. In all these cases, the physical change of the power line may cause attenuation of surface waves and loss of throughput.

Passive surface wave launchers described in the present disclosure may be used before and after the physical change in the power line to compensate for the loss due to the physical change. A passive surface wave launcher may be configured as a receiver and the passive surface wave launcher may receive the surface wave upstream of the physical change of the power line. The receiver may convert the surface wave to a RF signal with a TEM mode. A cable may electrically couple the receiver to the other surface wave launcher configured as a transmitter. The transmitter may receive the RF signal with the TEM mode. The transmitter may convert the RF signal to the surface wave with the TM mode. In addition, the transmitter may launch the surface wave on the power line downstream of the physical change. Throughput of the overall system may improve since the loss compensation device compensates for loss in the power line due to the physical change.

A distance between the transmitter, the repeater, the receiver, or the LAN may be between a few meters and four kilometers.

A broadband communication system may include a first transmitter. The first transmitter may be physically positioned proximate a power line. The first transmitter may launch a surface wave on the power line. The broadband communication system may also include a loss compensation device. The loss compensation device may be physically positioned proximate a physical change of the power line. The loss compensation device may include a receiver. The receiver may be physically positioned proximate the power line on a first side of the physical change of the power line. The receiver may receive the surface wave via the power line. In addition, the receiver may convert the surface wave to a RF signal. The loss compensation device may also include a second transmitter. The second transmitter may be physically positioned proximate the power line on a second side of the physical change of the power line. The second transmitter may receive the RF signal from the receiver through a coaxial cable. The second transmitter may also convert the RF signal to the surface wave. In addition, the second transmitter may launch the surface wave on the power line downstream of the physical change. The loss compensation device may bypass the physical change of the power line to compensate for loss due to the physical change of the power line.

The first transmitter may include a surface wave launcher. The surface wave launcher may include a first PCB. The first PCB may include a first conductor pin. The first conductor pin may receive a RF signal with a TEM mode. The first transmitter may also convert the RF signal to the surface wave with a TM mode. The surface wave launcher may also include one or more ground pads. The surface wave launcher may include a first cylinder. The first cylinder may be electrically coupled to the first conductor pin. The first cylinder may define a first cylinder opening. The first cylinder and the first ground plates may form a transition from coplanar to GL structure and the first cylinder may generate and also propagate the surface wave. Further, the surface wave launcher may include a first insulator. The first insulator may be physically positioned within at least a portion of the first cylinder opening and between the first cylinder and the power line extending through the first cylinder opening. The first insulator may mechanically isolate the first cylinder from the power line. The first insulator may also permit the first cylinder to launch the surface wave on the power line by electrical coupling. The surface wave launcher may include one or more ground plates. The one or more ground plates may be electrically coupled to the one or more ground pads. The one or more ground plates may provide a ground reference for the first conductor pin and the first cylinder. The first conductor pin and the first cylinder may be physically positioned proximate the one or more ground plates.

The loss compensation structure may include a first receiver, a cable, and a second transmitter. The surface wave launcher (transmitter) may be configured as a receiver. The receiver may include a second cylinder. The second cylinder may define a second cylinder opening. The second cylinder may receive the surface wave from the power line. The second cylinder may convert the surface wave to a RF signal. The receiver may also include a second insulator. The second insulator may be physically positioned within at least a portion of the second cylinder opening and between the second cylinder and the power line extending through the second cylinder opening. The second insulator may mechanically isolate the second cylinder from the power line. The second insulator may also permit the second cylinder to receive the surface wave from the power line. The receiver may include a second PCB. The second PCB may include a second conductor pin. The second conductor pin may be electrically coupled to the second cylinder. The second conductor pin may receive the RF signal from the second cylinder. The surface wave receiver may also convert the surface wave with the TM mode to the RF signal with the TEM mode. The second PCB may also include one or more ground pads. The receiver may include one or more ground plates. The one or more ground plates may be electrically coupled to the one or more ground pads. The one or more ground plates may provide a ground reference for the second conductor pin and the second cylinder. The second conductor pin and the second cylinder may be physically positioned proximate the one or more ground plates.

The loss compensation structure may include a second transmitter, which may include a surface wave launcher. The surface wave launcher may include a third PCB. The third PCB may include a third conductor pin. The third conductor pin may receive the RF signal from the receiver. The third surface wave launcher may also convert the RF signal with the TEM mode to the surface wave with the TM mode. The third PCB may also include one or more ground pads. The surface wave launcher may include a third cylinder. The third cylinder may be electrically coupled to the third conductor pin. The third cylinder may define a third cylinder opening. The third cylinder may receive the RF signal from the third conductor pin. The third cylinder may generate and launch the surface wave. In addition, the surface wave launcher may include a third insulator. The third insulator may be physically positioned within at least a portion of the third cylinder opening and between the third cylinder and the power line extending through the third cylinder opening. The third insulator may mechanically isolate the third cylinder from the power line. The third insulator may permit the third cylinder to launch the surface wave to the power line. Further, the surface wave launcher may include one or more ground plates. The one or more ground plates may be electrically coupled to the one or more ground pads. The one or more ground plates may provide a ground reference for the third conductor pin and the third cylinder. The third conductor pin and the third cylinder may be physically positioned proximate the one or more ground plates.

After the second transmitter of the loss compensation structure, the surface waves may traverse on the power line to destination LAN equipment. There may also be a second surface wave receiver which may include a fourth cylinder. The fourth cylinder may define a fourth cylinder opening. The fourth cylinder may receive the surface wave from the power line. The fourth cylinder may convert the surface wave to a RF signal. The second surface wave receiver may also include a fourth insulator. The fourth insulator may be configured to be physically positioned within at least a portion of the fourth cylinder opening and between the fourth cylinder and the power line extending through the fourth cylinder opening. The fourth insulator may mechanically isolate the fourth cylinder from the power line. The fourth insulator may also permit the fourth cylinder to receive the surface wave from the power line. The second surface wave receiver may include a fourth PCB. The fourth PCB may include a fourth conductor pin. The fourth conductor pin may be electrically coupled to the fourth cylinder. The fourth conductor pin may receive the RF signal wave from the fourth cylinder. The second surface wave receiver may also convert the surface wave with the TM mode to a RF signal with the TEM mode. The fourth PCB may also include one or more ground pads. The second surface wave receiver may include one or more ground plates. The one or more ground plates may be electrically coupled to the one or more ground pads. The one or more ground plates may provide a ground reference for the fourth conductor pin and the fourth cylinder. The fourth conductor pin and the fourth cylinder may be physically positioned proximate the one or more ground plates.

The first surface wave launcher (transmitter) may include a first RF connector. The first RF connector may include a center pin. The center pin may be electrically coupled to the first conductor pin. The first RF connector may also include a ground portion. The ground portion may be electrically coupled to the ground pads. The first RF connector may mechanically couple and electrically couple to a cable to provide the RF signal with the TEM mode from the cable to the launcher.

The loss compensation structure may include the first receiver and the second transmitter. The first receiver may include a second RF connector. The second RF connector may include a second center pin. The second center pin may be electrically coupled to the second conductor pin. The second RF connector may also include a second ground portion. The second ground portion may be electrically coupled to the one or more ground pads. The second RF connector may mechanically couple and electrically couple to a cable to send the RF signal with the TEM mode to the second transmitter through the coaxial cable.

The second surface wave launcher (transmitter) may include a third RF connector. The third RF connector may include a center pin. The center pin may be electrically coupled to the third conductor pin. The third RF connector may also include a ground portion. The ground portion may be electrically connected to the one or more ground pads. The third RF connector may mechanically couple and electrically couple to a cable to provide the RF signal with the TEM mode to the cable.

After the second transmitter of the loss compensation structure, the surface waves may traverse on the power line to destination receiver and LAN equipment. The second receiver may include a fourth RF connector. The fourth RF connector may include a fourth center pin. The fourth center pin may be electrically coupled to the fourth conductor pin. The fourth RF connector may also include a fourth ground portion. The fourth ground portion may be electrically coupled to the one or more ground pads. The fourth RF connector may mechanically couple and electrically couple to a cable to send the RF signal with the TEM mode to the LAN equipment at the destination.

The cable may include a coaxial cable.

The physical change of the power line may include a bend, a break, a joint, a fork, or some combination thereof in the power line.

The loss compensation device may include a first receiver, a second transmitter and an amplifier. The amplifier may be electrically coupled to the first receiver and the second transmitter. The amplifier may compensate for loss due to the receiver converting the surface wave with the TM mode to the RF signal with the TEM mode. In addition, the amplifier may compensate for loss due to the second transmitter converting the RF signal with the TEM mode to the surface wave with the TM mode.

The power line may include a first power line. The loss compensation device may also include a second transmitter. The second transmitter may be physically positioned proximate a second power line. The second transmitter may receive the RF signal from the receiver. The second transmitter may also convert the RF signal to the surface wave. In addition, the second transmitter may launch the surface wave on the second power line.

A method of assembly includes the steps defined in claim 13.

The one or more clamps may secure the first portion of the insulator between at least a portion of the first portion of the cylinder and a portion of the power line. The one or more clamps may also secure the second portion of the insulator between at least a portion of the second portion of the cylinder and another portion of the power line. In addition, the one or more clamps may cause the second portion of the cylinder to physically contact the first portion of the cylinder such that the second portion of the cylinder is electrically coupled to the first portion of the cylinder. Further, the one or more clamps may maintain a proximity between the first portion of the cylinder and the conductor pin to maintain electrical coupling between the first portion of the cylinder and the conductor pin.

The method may also include mechanically coupling the platform device to a power pole physically positioned proximate the power line.

The first portion of the insulator and the second portion of the insulator, in the assembled state, may be physically positioned proximate the power line, the first portion of the cylinder, and the second portion of the cylinder such that the first portion of the cylinder and the second portion of the cylinder are mechanically isolated from the power line.

The first portion of the insulator and the second portion of the insulator, in the assembled state, may be physically positioned proximate the power line, the first portion of the cylinder, and the second portion of the cylinder such that the first portion of the cylinder and the second portion of the cylinder are electrically isolated from power signals that traverse the power line.

The first portion of the cylinder, in the assembled state, may be physically positioned proximate the PCB such that at least a portion of the first portion of the cylinder is physically positioned between two or more ground plates.

In some aspects, surface wave propagation may be enhanced by adding a couple more flared ground plates perpendicular to the PCB. In this and other aspects, a gap may be formed between the ground plates and the center conductor with the RF connector.

Example 1 may include a surface wave launcher including: a PCB including: a conductor pin configured to receive a RF signal; and a ground pad; a ground plate structure with a first ground plate and a second ground plate; a cylinder configured to be electrically coupled to the conductor pin and define a cylinder opening, the cylinder configured to: receive the RF signal from the conductor pin; form a coplanar Goubau line with the first and second ground plates, and form a transition from the coplanar Goubau line to a Goubau line structure at the end of the first and second ground plates; and generate and propagate the surface wave; an insulator configured to be physically positioned within at least a portion of the cylinder opening and between the cylinder and a portion of a power line, the insulator configured to mechanically isolate the cylinder from the power line and to permit the cylinder to launch the surface wave on the power line; and the ground plate structure electrically coupled to the ground pad and configured to provide a ground reference for the conductor pin and the cylinder, the conductor pin and the cylinder physically positioned proximate the ground plate structure.

Example 2 may include the surface wave launcher of example 1, wherein: the conductor pin is configured to receive the RF signal with a TEM mode; and the cylinder is configured to convert the RF signal to the surface wave with a TM mode after transitioning from coplanar to GL structure formed with cylinder and the ground plate structure.

Example 3 may include the surface wave launcher of any of examples 1 and 2 further including a platform device configured to be mechanically coupled to at least a portion of the PCB.

Example 4 may include the surface wave launcher of example 3, wherein the platform device includes a non-conductive material.

Example 5 may include the surface wave launcher of any of examples 3 and 4, wherein the platform device includes a wood or similar material that includes a dielectric constant similar to air, wherein the platform device is configured to withstand outdoor conditions including rainy weather.

Example 6 may include the surface wave launcher of any of examples 3-5, wherein the platform device includes: a support structure; and a clamp configured to attach to the support structure, the clamp configured to: apply a pressure to the cylinder to secure the insulator between at least a portion of the cylinder and a portion of the power line; and apply a pressure to the cylinder to maintain a proximity between the cylinder and the conductor pin to maintain electrical coupling of the cylinder and the conductor pin.

Example 7 may include the surface wave launcher of any of examples 1-6, wherein the surface wave launcher further includes a SMA connector including: a center pin electrically coupled to the conductor pin; and a ground portion electrically coupled to the ground pad, the SMA connector configured to mechanically and electrically couple to a cable to receive the RF signal.

Example 8 may include the surface wave launcher of any of examples 1-7, wherein the insulator is further configured to electrically isolate the cylinder from power signals that traverse the power line.

Example 9 may include the surface wave launcher of any of examples 1-8, wherein the cylinder is configured to provide the surface wave to the power line via electromagnetic coupling between the cylinder and the power line.

Example 10 may include the surface wave launcher of any of examples 1-9, wherein the ground plate structure is shaped as a flared ground plate that flares in a direction away from the cylinder.

Example 11 may include the surface wave launcher of example 10, wherein the ground plate structure flares in the direction away from the cylinder on a plane that is substantially parallel to a surface of the PCB.

Example 12 may include the surface wave launcher of any of examples 1-10, wherein the ground plate structure includes a first ground plate physically positioned proximate the cylinder on a first side and a second ground plate physically positioned proximate the cylinder on a second side that is opposite the first side.

Example 13 may include the surface wave launcher of example 12, wherein the first ground plate and the second ground plate are physically positioned proximate a first surface of the PCB and the ground plate structure further includes a third ground plate and a fourth ground plate physically positioned proximate a second surface of the PCB, wherein the first ground plate, the second ground plate, the third ground plate, and the fourth ground plate are each soldered to ground pads and are electrically coupled to each other.

Example 14 may include the surface wave launcher of any of examples 12 and 13, wherein the conductor pin is physically positioned proximate the cylinder on a third side on a plane that is orthogonal to a plane of the ground plate structure.

Example 15 may include the surface wave launcher of any of examples 12 and 13, wherein the conductor pin is physically positioned proximate the cylinder on a third side on a plane that is not parallel to a plane of the ground plate structure.

Example 16 may include the surface wave launcher of any of examples 1-15, wherein the ground plate structure forms a three-dimensional ground structure for the surface wave launcher.

Example 17 may include the surface wave launcher of any of examples 1-16, wherein the ground plate structure provides the ground reference for the conductor pin and the cylinder without a ground wire electrically coupled.

Example 18 may include the surface wave launcher of any of examples 1-17, where the insulator includes a material that includes a thickness between two millimeters and twelve millimeters and the thickness of the insulator is based on at least one of a frequency of operation, surface wave launcher dimensions, material properties of the insulator such as a dielectric constant.

Example 19 may include the surface wave launcher of any of examples 1-18, wherein the insulator includes at least one of a porcelain material, a Zirconia material, an Alumina material, an FRP material, and a composite polymer material.

Example 20 may include the surface wave launcher of any of examples 1-18, wherein the insulator includes a ceramic material.

Example 21 may include the surface wave launcher of any of examples 1-20, wherein at least a portion of the PCB includes a PTFE material.

Example 22 may include the surface wave launcher of any of examples 1-21, wherein the surface wave launcher is configured to operate within Wi-Fi frequency bands.

Example 23 may include the surface wave launcher of any of examples 1-22, wherein the surface wave launcher is configured to be positioned within an interior volume defined by an enclosure.

Example 24 a broadband communication system including: a first transmitter configured to be physically positioned proximate a power line, the first transmitter configured to launch a surface wave on the power line; and a loss compensation device configured to be physically positioned proximate a physical change of the power line, the loss compensation device including: a receiver configured to be physically positioned proximate the power line on a first side of the physical change of the power line, the receiver configured to: receive the surface wave via the power line; and convert the surface wave to a RF signal; a second transmitter configured to be physically positioned proximate the power line on a second side of the physical change of the power line, the second transmitter configured to: receive the RF signal from the receiver; convert the RF signal to the surface wave; and launch the surface wave on the power line downstream of the physical change, the loss compensation device configured to bypass the physical change of the power line to compensate for loss due to the physical change of the power line.

Example 25 may include the broadband communication system of example 24, wherein the receiver includes a first receiver and the broadband communication system further includes a second receiver physically positioned proximate destination LAN equipment, the second receiver configured to: receive the surface wave via the power line; and convert the surface wave to another RF signal; and send the another RF signal to the destination LAN equipment.

Example 26 may include the broadband communication system of any of examples 24 and 25, wherein the first transmitter includes a surface wave launcher including: a first PCB including: a first conductor pin configured to receive a TEM mode RF signal with a TEM mode; and a ground pad; a first cylinder configured to be electrically coupled to the first conductor pin and define a first cylinder opening, the first cylinder configured to: form a transition from coplanar to a Goubau line structure with a ground plate structure, convert the TEM mode RF signal to the surface wave with a TM mode; and generate and propagate the surface wave; a first insulator configured to be physically positioned within at least a portion of the first cylinder opening and between the first cylinder and the power line, the first insulator configured to mechanically isolate the first cylinder from the power line and to permit the first cylinder to launch the surface wave on the power line; and the ground plate structure electrically coupled to the ground pad and configured to provide a ground reference for the first conductor pin and the first cylinder, the first conductor pin and the first cylinder physically positioned proximate the ground plate structure.

Example 27 may include the broadband communication system of any of examples 24-26, wherein the receiver includes: a second cylinder defining a second cylinder opening, the second cylinder configured to: receive the surface wave from the power line; and convert the surface wave with the TM mode to another RF signal with the TEM mode; a second insulator configured to be physically positioned within at least a portion of the second cylinder opening and between the second cylinder and the power line, the second insulator configured to mechanically isolate the second cylinder from the power line and to permit the second cylinder to receive the surface wave from the power line; and a second PCB including: a second conductor pin electrically coupled to the second cylinder, the second conductor pin configured to receive the surface wave from the second cylinder; and a ground pad; a ground plate structure electrically coupled to the ground pad and configured to provide a ground reference for the second conductor pin and the second cylinder, the second conductor pin and the second cylinder physically positioned proximate the ground plate structure.

Example 28 may include the broadband communication system of any of examples 24-27, wherein the second transmitter includes a surface wave launcher including: a third PCB including: a third conductor pin configured to receive the RF signal from the receiver; and a ground pad; a third cylinder configured to be electrically coupled to the third conductor pin and define a third cylinder opening, the third cylinder configured to: form a transition from coplanar to Goubau line structure with a ground plate structure; convert the RF signal with the TEM mode to the surface wave with the TM mode; generate and propagate the surface wave; a third insulator configured to be physically positioned within at least a portion of the third cylinder opening and between the third cylinder and the power, the third insulator configured to mechanically isolate the third cylinder from the power line and to permit the third cylinder to provide the surface wave to the power line; and the ground plate structure electrically coupled to the ground pad and configured to provide a ground reference for the third conductor pin and the third cylinder, the third conductor pin and the third cylinder physically positioned proximate the ground plate structure.

Example 29 may include the broadband communication system of any of examples 24-28, further including a second receiver physically positioned proximate destination LAN equipment, the second receiver including: a fourth cylinder defining a fourth cylinder opening, the fourth cylinder configured to: receive the surface wave from the power line; and convert the surface wave with the TM mode to an RF signal with the TEM mode; and send the RF signal to the destination LAN equipment; a fourth insulator configured to be physically positioned within at least a portion of the fourth cylinder opening and between the fourth cylinder and the power line, the fourth insulator configured to mechanically isolate the fourth cylinder from the power line and to permit the fourth cylinder to receive the surface wave from the power line; and a fourth PCB including: a fourth conductor pin electrically coupled to the fourth cylinder, the fourth conductor pin configured to receive the surface wave from the fourth cylinder; and a ground pad; and a ground plate structure electrically coupled to the ground pad and configured to provide a ground reference for the fourth conductor pin and the fourth cylinder, the fourth conductor pin and the fourth cylinder physically positioned proximate the ground plate structure.

Example 30 may include the broadband communication system of any of examples 26-29, wherein the first transmitter includes a first SMA connector including: a center pin electrically coupled to the second conductor pin; and a ground portion electrically coupled to the ground pad, the first SMA connector configured to mechanically and electrically couple to a cable to receive the RF signal with the TEM mode from a source modem via the cable.

Example 31 may include the broadband communication system of any of examples 26-30, wherein the first receiver includes a second SMA connector including: a second center pin electrically coupled to the second conductor pin; and a second ground portion electrically coupled to the ground pad, the second SMA connector configured to mechanically and electrically couple to a cable to send the RF signal with the TEM mode to the second transmitter through the cable.

Example 32 may include the broadband communication system of any of examples 25-31, wherein the second transmitter includes a third SMA connector including: a third center pin electrically connected to the third conductor pin; and a third ground portion electrically connected to the ground pad, the third SMA connector configured to mechanically and electrically couple to a cable to receive the RF signal with the TEM mode from the first receiver through the cable.

Example 33 may include the broadband communication system of any of examples 30-32, wherein the cable includes a coaxial cable.

Example 34 may include the broadband communication system of example 29, wherein the second receiver includes a fourth SMA connector including: a fourth center pin electrically coupled to the fourth conductor pin; and a fourth ground portion electrically coupled to the ground pad, the fourth SMA connector configured to mechanically and electrically couple to a cable to send the RF signal with the TEM mode from the cable to the destination LAN equipment.

Example 35 may include the broadband communication system of any of examples 26-34, wherein the physical change in the power line includes a bend, break, joint, or fork in the power line.

Example 36 may include the broadband communication system of any of examples 26-35, wherein the loss compensation device further includes an amplifier electrically coupled to the first receiver and the second transmitter, the amplifier configured to compensate for loss due to the first receiver converting the surface wave with the TM mode to the RF signal with the TEM mode and the second transmitter converting the RF signal with the TEM mode to the surface wave with the TM mode.

Example 37 may include the broadband communication system of any of examples 26-33, the power line including a first power line and the loss compensation device further including a second transmitter physically positioned proximate a second power line, the second transmitter configured to: receive the RF signal from the first receiver; convert the RF signal to the surface wave; and launch the surface wave on the second power line.

Example 38 may include a method of assembly including: positioning a PCB within an opening defined by a platform device, the PCB including: a ground plate structure with a first ground plate and a second ground plate; a conductor pin; and a ground pad, wherein the ground plate is electrically coupled to the ground pad and mechanically coupled to the PCB; positioning a first portion of a cylinder proximate the PCB such that the first portion of the cylinder is electrically coupled to the conductor pin and physically positioned proximate the ground plate structure, wherein the first and second ground plates and the cylinder form a coplanar Goubau line and a transition from the coplanar Goubau line to a Goubau line structure at the end of the first and second ground plates; positioning a first portion of an insulator proximate the first portion of the cylinder; positioning the PCB, the first portion of the cylinder, and the first portion of the insulator relative a power line such that the first portion of the insulator is physically positioned proximate the power line; positioning a second portion of the insulator proximate the first portion of the insulator and the power line; positioning a second portion of the cylinder proximate the second portion of the insulator such that the first portion of the cylinder and the second portion of the cylinder define a cylinder opening, at least a portion of the first portion of the insulator and the second portion of the insulator are positioned within the cylinder opening and the power line extends through the cylinder opening and at least a portion of the insulator extends beyond the cylinder to prevent arcing between the power line and the cylinder; and attaching a clamp to the platform device such that at least a portion of the first portion of the cylinder, the second portion of the cylinder, the first portion of the insulator, and the second portion insulator are physically positioned between a portion of the clamp and a portion of the platform device.

Example 39 may include the method of assembly of example 38, wherein the clamp is configured to: secure the first portion of the insulator between at least a portion of the first portion of the cylinder and a portion of the power line; secure the second portion of the insulator between at least a portion of the second portion of the cylinder and another portion of the power line; cause the second portion of the cylinder to physically contact the first portion of the cylinder such that the second portion of the cylinder is electrically coupled to the first portion of the cylinder; and maintain a proximity between the first portion of the cylinder and the conductor pin to maintain electrical coupling between the first portion of the cylinder and the conductor pin.

Example 40 may include the method of assembly of any of examples 38 and 39 further including attaching solder between the conductor pin and the cylinder, the soldering configured to provide support to the cylinder.

Example 41 may include the method of assembly of any of examples 38-40, the method further including mechanically coupling the platform device to a power pole physically positioned proximate the power line.

Example 42 may include the method of assembly of any of examples 38-41, wherein the first portion of the insulator and the second portion of the insulator are physically positioned proximate the power line, the first portion of the cylinder, and the second portion of the cylinder such that the first portion of the cylinder and the second portion of the cylinder are mechanically isolated from the power line.

Example 43 may include the method of assembly of any of examples 38-42, wherein the first portion of the insulator and the second portion of the insulator are physically positioned proximate the power line, the first portion of the cylinder, and the second portion of the cylinder such that the first portion of the cylinder and the second portion of the cylinder are electrically isolated from power signals that traverse the power line.

Example 44 may include the method of assembly of any of examples 38-43, wherein the first portion of the cylinder is positioned proximate the PCB such that at least a portion of the first portion of the cylinder is physically positioned between two or more ground plates of the ground plate structure.

As used in the present disclosure, terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to aspects containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although aspects of the present disclosure have been described in detail, various changes, substitutions, and alterations could be made hereto without departing from the scope of the present disclosure.

## Claims

1. A surface wave launcher (103) comprising:
a printed circuit board, PCB, (202) comprising:
a conductor pin configured to receive a radio frequency, RF, signal; and
a ground pad;
ground plate structure with a first ground plate (204a) and a second ground plate (204b);
a cylinder (214) configured to be electrically coupled to the conductor pin and define a cylinder opening, the cylinder (214) configured to:
receive the RF signal from the conductor pin; and
form a coplanar Goubau line, GL, with the first and second ground plates (204a, 204b); and
form a transition from 2. the coplanar Goubau line, GB, to a Goubau line structure at the end of the first and second ground plates (204a, 204b);
and
generate and propagate the surface wave;
an insulator (212) configured to be physically positioned within at least a portion of the cylinder opening and between the cylinder (214) and a portion of a power line, the insulator (212) configured to mechanically isolate the cylinder (214) from the power line and to permit the cylinder (214) to launch the surface wave on the power line; and
the ground plate structure (204a, 204b) electrically coupled to the ground pad and configured to provide a ground reference for the conductor pin and the cylinder (214), the conductor pin and the cylinder (214) physically positioned proximate the ground plate structure (204a, 204b).

2. The surface wave launcher (103) of claim 1, wherein:
the conductor pin is configured to receive the RF signal with a transverse electromagnetic, TEM, mode; and
the cylinder (214) is configured to convert the RF signal to the surface wave with a transverse magnetic, TM, mode after transitioning from coplanar to GL structure formed with cylinder (214) and the ground plate structure (204a, 204b).

3. The surface wave launcher (103) of any one of claims 1 or 2, further comprising a platform device configured to be mechanically coupled to at least a portion of the PCB (202), wherein the platform device comprises:
a support structure (208); and
a clamp configured to attach to the support structure (208), the clamp configured to:
apply a pressure to the cylinder (214) to secure the insulator (212) between at least a portion of the cylinder (214) and a portion of the power line; and
apply a pressure to the cylinder (214) to maintain a proximity between the cylinder (214) and the conductor pin to maintain electrical coupling of the cylinder (214) and the conductor pin.

4. The surface wave launcher (103) of any one of claims 1 to 3, wherein the surface wave launcher (103) further comprises a subminiature version A, SMA, connector comprising:
a center pin electrically coupled to the conductor pin; and
a ground portion electrically coupled to the ground pad, the SMA connector configured to mechanically and electrically couple to a cable to receive the RF signal.

5. The surface wave launcher (103) of any one of claims 1 to 4, wherein the insulator (212) is further configured to electrically isolate the cylinder (214) from power signals that traverse the power line.

6. The surface wave launcher (103) of any one of claims 1 to 5, wherein the ground plate structure (204a, 204b) comprises a first ground plate (204a) physically positioned proximate the cylinder (214) on a first side and a second ground plate (204b) physically positioned proximate the cylinder (214) on a second side that is opposite the first side.

7. The surface wave launcher (103) of any one of claims 1 to 6, wherein the ground plate structure (204a, 204b) provides the ground reference for the conductor pin and the cylinder (214) without a ground wire electrically coupled.

8. A broadband communication system comprising:
a first transmitter configured to be physically positioned proximate a power line, the first transmitter configured to launch a surface wave on the power line; and
a loss compensation device configured to be physically positioned proximate a physical change of the power line, the loss compensation device comprising:
a receiver configured to be physically positioned proximate the power line on a first side of the physical change of the power line, the receiver configured to:
receive the surface wave via the power line; and
convert the surface wave to a radio frequency, RF, signal;
a second transmitter configured to be physically positioned proximate the power line on a second side of the physical change of the power line, the second transmitter configured to:
receive the RF signal from the receiver;
convert the RF signal to the surface wave; and
launch the surface wave on the power line downstream of the physical change, the loss compensation device configured to bypass the physical change of the power line to compensate for loss due to the physical change of the power line;
wherein the first transmitter comprises a first surface wave launcher (103) of any one of claims 1 to 7,
wherein the conductor pin is configured to receive a transverse electromagnetic, TEM, mode RF signal with a TEM mode; and
wherein the cylinder (214) is further configured to convert the TEM mode RF signal to the surface wave with a transverse magnetic, TM, mode; and

9. The broadband communication system of claim 8, wherein the receiver comprises:
a second cylinder defining a second cylinder opening, the second cylinder configured to:
receive the surface wave from the power line; and
convert the surface wave with the TM mode to another RF signal with the TEM mode;
a second insulator configured to be physically positioned within at least a portion of the second cylinder opening and between the second cylinder and the power line, the second insulator configured to mechanically isolate the second cylinder from the power line and to permit the second cylinder to receive the surface wave from the power line; and
a second PCB comprising:
a second conductor pin electrically coupled to the second cylinder, the second conductor pin configured to receive the surface wave from the second cylinder; and
a ground pad;
a ground plate structure electrically coupled to the ground pad and configured to provide a ground reference for the second conductor pin and the second cylinder, the second conductor pin and the second cylinder physically positioned proximate the ground plate structure.

10. The broadband communication system of any one of claims 8 or 9, wherein the second transmitter comprises a surface wave launcher comprising:
a third PCB comprising:
a third conductor pin configured to receive the RF signal from the receiver; and
a ground pad;
a third cylinder configured to be electrically coupled to the third conductor pin and define a third cylinder opening, the third cylinder configured to:
form a transition from coplanar to Goubau line structure with a ground plate structure;
convert the RF signal with the TEM mode to the surface wave with the TM mode;
generate and propagate the surface wave;
a third insulator configured to be physically positioned within at least a portion of the third cylinder opening and between the third cylinder and the power, the third insulator configured to mechanically isolate the third cylinder from the power line and to permit the third cylinder to provide the surface wave to the power line; and
the ground plate structure electrically coupled to the ground pad and configured to provide a ground reference for the third conductor pin and the third cylinder, the third conductor pin and the third cylinder physically positioned proximate the ground plate structure.

11. The broadband communication system of any one of claims 8 to 10, further comprising a second receiver physically positioned proximate destination LAN equipment, the second receiver comprising:
a fourth cylinder defining a fourth cylinder opening, the fourth cylinder configured to:
receive the surface wave from the power line; and
convert the surface wave with the TM mode to an RF signal with the TEM mode; and
send the RF signal to the destination LAN equipment;
a fourth insulator configured to be physically positioned within at least a portion of the fourth cylinder opening and between the fourth cylinder and the power line, the fourth insulator configured to mechanically isolate the fourth cylinder from the power line and to permit the fourth cylinder to receive the surface wave from the power line; and
a fourth PCB comprising:
a fourth conductor pin electrically coupled to the fourth cylinder, the fourth conductor pin configured to receive the surface wave from the fourth cylinder; and
a ground pad; and
a ground plate structure electrically coupled to the ground pad and configured to provide a ground reference for the fourth conductor pin and the fourth cylinder, the fourth conductor pin and the fourth cylinder physically positioned proximate the ground plate structure.

12. The broadband communication system of any one of claims 8 to 11, wherein the loss compensation device further comprises an amplifier electrically coupled to the first receiver and the second transmitter, the amplifier configured to compensate for loss due to the first receiver converting the surface wave with the TM mode to the RF signal with the TEM mode and the second transmitter converting the RF signal with the TEM mode to the surface wave with the TM mode.

13. A method of assembly comprising:
positioning a printed circuit board, PCB, (202) within an opening defined by a platform device, the PCB (202) comprising:
a ground plate structure with a first ground plate (204a) and a second ground plate ( 204b);
a conductor pin; and
a ground pad, wherein the ground plate structure (204a, 204b) is electrically coupled to the ground pad and mechanically coupled to the PCB (202);
positioning a first portion of a cylinder (214) proximate the PCB (202) such that the first portion of the cylinder (214) is electrically coupled to the conductor pin and physically positioned proximate the ground plate structure (204a, 204b), wherein the first and second ground plates (204a, 204b) and the cylinder (214) form a coplanar Goubau line and a transition from the coplanar Goubau line to a Goubau line structure at the end of the first and second ground plates (204a, 204b);
positioning a first portion of an insulator (212) proximate the first portion of the cylinder (214);
positioning the PCB (202), the first portion of the cylinder (214), and the first portion of the insulator (212) relative a power line such that the first portion of the insulator (212) is physically positioned proximate the power line;
positioning a second portion of the insulator (212) proximate the first portion of the insulator (212) and the power line;
positioning a second portion of the cylinder (214) proximate the second portion of the insulator (212) such that the first portion of the cylinder (214) and the second portion of the cylinder (214) define a cylinder opening, at least a portion of the first portion of the insulator (212) and the second portion of the insulator (212) are positioned within the cylinder opening and the power line extends through the cylinder opening and at least a portion of the insulator (212) extends beyond the cylinder (214) to prevent arcing between the power line and the cylinder (214); and
attaching a clamp to the platform device such that at least a portion of the first portion of the cylinder (214), the second portion of the cylinder (214), the first portion of the insulator (212), and the second portion insulator (212) are physically positioned between a portion of the clamp and a portion of the platform device.

14. The method of assembly of claim 13 further comprising attaching solder between the conductor pin and the cylinder (214), the soldering configured to provide support to the cylinder (214).

15. The method of assembly of any one of claims 13 or 14, the method further comprising mechanically coupling the platform device to a power pole physically positioned proximate the power line.

## Patentansprüche

1. Oberflächenwellen-Starteinrichtung (103), die Folgendes umfasst:
eine gedruckte Leiterplatte, PCB, (202), die Folgendes umfasst:
einen Leiterstift, der konfiguriert ist, ein Funkfrequenzsignal, RF-Signal, zu empfangen; und
eine Erdungskontaktfläche;
eine Erdungsplattenstruktur mit einer ersten Erdungsplatte (204a) und einer zweiten Erdungsplatte (204b); einen Zylinder (214), der konfiguriert ist, an den Leiterstift elektrisch gekoppelt zu sein, und eine Zylinderöffnung definiert, wobei der Zylinder (214) konfiguriert ist zum:
Empfangen des RF-Signals von dem Leiterstift; und
Bilden einer Goubau-Koplanarleitung, GL, mit der ersten und der zweiten Erdungsplatte (204a; 204b); und
Bilden eines Übergangs von der Goubau-Koplanarleitung, GB, zu einer Goubau-Leitungsstruktur am Ende der ersten und der zweiten Erdungsplatte (204a, 204b); und
Erzeugen und Ausbreiten der Oberflächenwelle;
einen Isolator (212), der konfiguriert ist, physisch zumindest innerhalb eines Teils der Zylinderöffnung und zwischen dem Zylinder (214) und einem Teil einer Stromleitung positioniert zu sein, wobei der Isolator (212) konfiguriert ist, den Zylinder (214) von der Stromleitung mechanisch zu isolieren und dem Zylinder (214) zu erlauben, die Oberflächenwelle auf der Stromleitung zu starten; und
die Erdungsplattenstruktur (204a, 204b), die an die Erdungskontaktfläche elektrisch gekoppelt ist und konfiguriert ist, eine Bezugsmasse für den Leiterstift und den Zylinder (214) bereitzustellen, wobei der Leiterstift und der Zylinder (214) physisch in der Nähe der Erdungsplattenstruktur (204a, 204b) positioniert sind.

2. Oberflächenwellen-Starteinrichtung (103), nach Anspruch 1, wobei:
der Leiterstift konfiguriert ist, das RF-Signal mit einer transversalen elektromagnetischen Mode, TEM-Mode, zu empfangen; und
der Zylinder (214) konfiguriert ist, das RF-Signal nach einem Übergang von einer GL-Koplanarstruktur, die mit dem Zylinder (214) und der Erdungsplattenstruktur (204a, 204b) gebildet wird, in die Oberflächenwellen mit einer transversalen magnetischen Mode, TM-Mode, umzusetzen.

3. Oberflächenwellen-Starteinrichtung (103) nach einem der Ansprüche 1 bis 2, die ferner eine Plattformvorrichtung umfasst, die konfiguriert ist, zumindest an einen Teil der PCB (202) mechanisch gekoppelt zu sein, wobei die Plattformvorrichtung Folgendes umfasst:
eine Tragestruktur (208); und
eine Klammer, die konfiguriert ist, die Tragestruktur (208) anzubringen, wobei die Klammer konfiguriert ist zum:
Ausüben eines Drucks auf den Zylinder (214), um den Isolator (212) zwischen zumindest einem Teil des Zylinders (214) und einem Teil der Stromleitung zu befestigen; und
Ausüben eines Drucks auf den Zylinder (214), um eine Nähe zwischen dem Zylinder (214) und dem Leiterstift aufrechtzuerhalten, um eine elektrische Kopplung des Zylinders (214) und des Leiterstifts aufrechtzuerhalten.

4. Oberflächenwellen-Starteinrichtung (103) nach einem der Ansprüche 1 bis 3, wobei die Oberflächenwellen-Starteinrichtung (103) ferner einen Subminiaturstecker Version A, SMA-Stecker Version A, umfasst, der Folgendes umfasst:
einen zentralen Stift, der an den Leiterstift elektrisch gekoppelt ist; und
einen Erdungsteil, der an die Erdungskontaktfläche elektrisch gekoppelt ist, wobei der SMA-Stecker konfiguriert ist, mechanisch und elektrisch an ein Kabel anzukoppeln, um das RF-Signal zu empfangen.

5. Oberflächenwellen-Starteinrichtung (103) nach einem der Ansprüche 1 bis 4, wobei der Isolator (212) ferner konfiguriert ist, den Zylinder (214) von Stromsignalen, die die Stromleitung durchqueren, elektrisch zu isolieren.

6. Oberflächenwellen-Starteinrichtung (103) nach einem der Ansprüche 1 bis 5, wobei die Erdungsplattenstruktur (204a, 204b) eine erste Erdungsplatte (204a), die physisch in der Nähe des Zylinders (214) auf einer ersten Seite positioniert ist, und eine zweite Erdungsplatte (204b), die physisch in der Nähe des Zylinders (214) auf einer zweiten Seite, die der ersten Seite gegenüber liegt, positioniert ist, umfasst.

7. Oberflächenwellen-Starteinrichtung (103) nach einem der Ansprüche 1 bis 6, wobei die Erdungsplattenstruktur (204a, 204b) die Bezugsmasse für den Leiterstift und den Zylinder (214) bereitstellt, ohne dass ein Erdungsdraht elektrisch gekoppelt ist.

8. Breitbandkommunikationssystem, das Folgendes umfasst:
einen ersten Sender, der konfiguriert ist, physisch in der Nähe einer Stromleitung positioniert zu sein, wobei der erste Sender konfiguriert ist, eine Oberflächenwelle auf der Stromleitung zu starten; und
eine Verlustkompensationsvorrichtung, die konfiguriert ist, physisch in der Nähe einer physischen Änderung der Stromleitung positioniert zu sein, wobei die Verlustkompensationsvorrichtung Folgendes umfasst:
einen Empfänger, der konfiguriert ist, physisch in der Nähe der Stromleitung auf einer ersten Seite der physischen Änderung der Stromleitung positioniert zu sein, wobei der Empfänger konfiguriert ist zum:
Empfangen der Oberflächenwelle über die Stromleitung; und Umsetzen der Oberflächenwelle in ein Funkfrequenzsignal, RF-Signal;
einen zweiten Sender, der konfiguriert ist, physisch in der Nähe der Stromleitung auf einer zweiten Seite der physischen Änderung der Stromleitung positioniert zu sein, wobei der zweite Sender konfiguriert ist zum:
Empfangen des RF-Signals von dem Empfänger;
Umsetzen des RF-Signals in die Oberflächenwelle; und
Starten der Oberflächenwelle auf der Stromleitung der physischen Änderung nachgelagert, wobei die Verlustkompensationsvorrichtung konfiguriert ist, die physische Änderung der Stromleitung zu umgehen, um einen Verlust aufgrund der physischen Änderung der Stromleitung zu kompensieren;
wobei der erste Sender eine erste Oberflächenwellen-Starteinrichtung (103) nach einem der Ansprüche 1 bis 7 umfasst,
wobei der Leiterstift konfiguriert ist, ein RF-Signal mit einer transversalen elektromagnetischen Mode, TEM-Mode-RF-Signal, mit einer TEM-Mode zu empfangen; und
wobei der Zylinder (214) ferner konfiguriert ist, das TEM-Mode-RF-Signal in die Oberflächenwelle mit einer transversalen magnetischen Mode, TM-Mode, umzusetzen; und

9. Breitbandkommunikationssystem nach Anspruch 8, wobei der Empfänger Folgendes umfasst:
einen zweiten Zylinder, der eine zweite Zylinderöffnung definiert, wobei der zweite Zylinder konfiguriert ist zum:
Empfangen der Oberflächenwelle von der Stromleitung; und Umsetzen der Oberflächenwelle mit der TM-Mode in ein weiteres RF-Signal mit der TEM-Mode;
einen zweiten Isolator, der konfiguriert ist, physisch zumindest innerhalb eines Teils der zweiten Zylinderöffnung und zwischen dem zweiten Zylinder und der Stromleitung positioniert zu sein, wobei der zweite Isolator konfiguriert ist, den zweiten Zylinder von der Stromleitung mechanisch zu isolieren und dem zweiten Zylinder zu erlauben, die Oberflächenwelle von der Stromleitung zu empfangen; und
eine zweite PCB, die Folgendes umfasst:
einen zweiten Leiterstift, der elektrisch an den zweiten Zylinder gekoppelt ist, wobei der zweite Leiterstift konfiguriert ist, die Oberflächenwelle von dem zweiten Zylinder zu empfangen; und
eine Erdungskontaktfläche;
eine Erdungsplattenstruktur, die an die Erdungskontaktfläche elektrisch gekoppelt ist und konfiguriert ist, eine Bezugsmasse für den zweiten Leiterstift und den zweiten Zylinder bereitzustellen, wobei der zweite Leiterstift und der zweite Zylinder physisch in der Nähe der Erdungsplattenstruktur positioniert sind.

10. Breitbandkommunikationssystem nach einem der Ansprüche 8 oder 9, wobei der zweite Sender eine Oberflächenwellen-Starteinrichtung umfasst, die Folgendes umfasst:
eine dritte PCB, die Folgendes umfasst:
einen dritten Leiterstift, der konfiguriert ist, das RF-Signal von dem Empfänger zu empfangen; und
eine Erdungskontaktfläche;
einen dritten Zylinder, der konfiguriert ist, an den dritten Leiterstift elektrisch gekoppelt zu sein und eine dritte Zylinderöffnung zu definieren, wobei der dritte Zylinder konfiguriert ist zum:
Bilden eines Übergangs von einer Koplanar- zu einer Goubau-Leitungsstruktur mit einer Erdungsplattenstruktur;
Umsetzen des RF-Signals mit der TEM-Mode in die Oberflächenwelle mit der TM-Mode;
Erzeugen und Ausbreiten der Oberflächenwelle;
einen dritten Isolator, der konfiguriert ist, physisch zumindest innerhalb eines Teils der dritten Zylinderöffnung und zwischen dem dritten Zylinder und der Leistung positioniert zu sein, wobei der dritte Isolator konfiguriert ist, den dritten Zylinder von der Stromleitung mechanisch zu isolieren und dem dritten Zylinder zu erlauben, die Oberflächenwelle an die Stromleitung zu liefern; und
die Erdungsplattenstruktur, die elektrisch an die Erdungskontaktfläche gekoppelt ist und konfiguriert ist, eine Bezugsmasse für den dritten Leiterstift und den dritten Zylinder bereitzustellen, wobei der dritte Leiterstift und der dritte Zylinder physisch in der Nähe der Erdungsplattenstruktur positioniert sind.

11. Breitbandkommunikationssystem nach einem der Ansprüche 8 bis 10, das ferner einen zweiten Empfänger umfasst, der physisch in der Nähe des Ziel-LAN-Geräts positioniert ist, wobei der zweite Empfänger Folgendes umfasst:
einen vierten Zylinder, der eine vierte Zylinderöffnung definiert, wobei der vierte Zylinder konfiguriert ist zum:
Empfangen der Oberflächenwelle von der Stromleitung; und Umsetzen der Oberflächenwelle mit der TM-Mode in ein RF-Signal mit der TEM-Mode; und
Senden des RF-Signals an das Ziel-LAN-Gerät;
einen vierten Isolator, der konfiguriert ist, physisch zumindest innerhalb eines Teils der vierten Zylinderöffnung und zwischen dem vierten Zylinder und der Stromleitung positioniert zu sein, wobei der vierte Isolator konfiguriert ist, den vierten Zylinder von der Stromleitung mechanisch zu isolieren und dem vierten Zylinder zu erlauben, die Oberflächenwelle von der Stromleitung zu empfangen; und
eine vierte PCB, die Folgendes umfasst:
einen vierten Leiterstift, der an den vierten Zylinder elektrisch gekoppelt ist, wobei der vierte Leiterstift konfiguriert ist, die Oberflächenwelle von dem vierten Zylinder zu empfangen; und
eine Erdungskontaktfläche; und
eine Erdungsplattenstruktur, die an die Erdungskontaktfläche elektrisch gekoppelt ist und konfiguriert ist, eine Bezugsmasse für den vierten Leiterstift und den vierten Zylinder bereitzustellen, wobei der vierte Leiterstift und der vierte Zylinder physisch in der Nähe der Erdungsplattenstruktur positioniert sind.

12. Breitbandkommunikationssystem nach einem der Ansprüche 8 bis 11, wobei die Verlustkompensationsvorrichtung ferner einen Verstärker umfasst, der an den ersten Empfänger und den zweiten Sender elektrisch gekoppelt ist, wobei der Verstärker konfiguriert ist, einen Verlust aufgrund dessen, dass der erste Empfänger die Oberflächenwelle mit der TM-Mode in das RF-Signal mit der TEM-Mode umsetzt und der zweite Sender das RF-Signal mit der TEM-Mode in die Oberflächenwelle mit der TM-Mode umsetzt, zu kompensieren.

13. Verfahren für eine Anordnung, das Folgendes umfasst:
Positionieren einer gedruckten Leiterplatte, PCB, (202) innerhalb einer Öffnung, die durch eine Plattformvorrichtung definiert ist, wobei die PCB (202) Folgendes umfasst:
eine Erdungsplattenstruktur mit einer ersten Erdungsplatte (204a) und einer zweiten Erdungsplatte (204b);
einen Leiterstift; und
eine Erdungskontaktfläche, wobei die Erdungsplattenstruktur (204a, 204b) an die Erdungskontaktfläche elektrisch gekoppelt ist und an die PCB (202) mechanisch gekoppelt ist;
Positionieren eines ersten Teils eines Zylinders (214) in der Nähe der PCB (202) derart, dass der erste Teil des Zylinders (214) an den Leiterstift elektrisch gekoppelt ist und physisch in der Nähe der Erdungsplattenstruktur (204a, 204b) positioniert ist, wobei die erste und die zweite Erdungsplatte (204a, 204b) und der Zylinder (214) eine Goubau-Koplanarleitung und einen Übergang von der Goubau-Koplanarleitung zu einer Goubau-Leitungsstruktur am Ende der ersten und der zweiten Erdungsplatte (204a, 204b) bilden;
Positionieren eines ersten Teils eines Isolators (212) in der Nähe des ersten Teils des Zylinders (214);
Positionieren der PCB (202), des ersten Teils des Zylinders (214) und des ersten Teils des Isolators (212) relativ zu einer Stromleitung so, dass der erste Teil des Isolators (212) physisch in der Nähe der Stromleitung positioniert ist;
Positionieren eines zweiten Teils des Isolators (212) in der Nähe des ersten Teils des Isolators (212) und der Stromleitung;
Positionieren eines zweiten Teils des Zylinders (214) in der Nähe des zweiten Teils des Isolators (212) derart, dass der erste Teil des Zylinders (214) und der zweite Teil des Zylinders (214) eine Zylinderöffnung definieren, wobei zumindest ein Teil des ersten Teils des Isolators (212) und des zweiten Teils des Isolators (212) innerhalb der Zylinderöffnung positioniert sind und sich die Stromleitung durch die Zylinderöffnung erstreckt und sich mindestens ein Teil des Isolators (212) über den Zylinder (214) hinaus erstreckt, um eine Lichtbogenbildung zwischen der Stromleitung und dem Zylinder (214) zu verhindern; und
Anbringen einer Klammer an der Plattformvorrichtung, so dass zumindest ein Teil des ersten Teils des Zylinders (214), des zweiten Teils des Zylinders (214), des ersten Teils des Isolators (212) und des zweiten Teils des Isolators (212) physisch zwischen einem Teil der Klammer und einem Teil der Plattformvorrichtung positioniert sind.

14. Verfahren der Anordnung nach Anspruch 13, das ferner umfasst, Lötmittel zwischen dem Leiterstift und dem Zylinder (214) anzubringen, wobei das Löten konfiguriert ist, eine Stütze für den Zylinder (214) bereitzustellen.

15. Verfahren der Anordnung nach einem der Ansprüche 13 oder 14, wobei das Verfahren ferner umfasst, die Plattformvorrichtung an einen Leistungspol, der physisch in der Nähe der Stromleitung positioniert ist, mechanisch zu koppeln.

## Revendications

1. Lanceur (103) d'ondes de surface comportant :
une carte à circuit imprimé, PCB, (202) comportant :
une broche de conducteur configurée pour recevoir un signal à radiofréquence, RF ; et
une plage de masse ;
une structure de plaques de masse dotée d'une première plaque (204a) de masse et d'une deuxième plaque (204b) de masse; un cylindre (214) configuré pour être couplé électriquement à la broche de conducteur et définir une ouverture de cylindre, le cylindre (214) étant configuré pour :
recevoir le signal RF en provenance de la broche de conducteur ; et
former une ligne de Goubau, GL, coplanaire avec les première et deuxième plaques (204a, 204b) de masse ; et
former une transition de la ligne de Goubau, GB, coplanaire à une structure de ligne de Goubau à l'extrémité des première et deuxième plaques (204a, 204b) de masse ; et
générer et propager l'onde de surface ;
un isolant (212) configuré pour être positionné physiquement à l'intérieur d'au moins une partie de l'ouverture de cylindre et entre le cylindre (214) et une partie d'une ligne d'alimentation, l'isolant (212) étant configuré pour isoler mécaniquement le cylindre (214) de la ligne d'alimentation et pour permettre au cylindre (214) de lancer l'onde de surface sur la ligne d'alimentation ; et
la structure de plaques (204a, 204b) de masse couplée électriquement à la plage de masse et configurée pour constituer une référence de masse pour la broche de conducteur et le cylindre (214), la broche de conducteur et le cylindre (214) étant positionnés physiquement à proximité de la structure de plaques (204a, 204b) de masse.

2. Lanceur (103) d'ondes de surface selon la revendication 1 :
la broche de conducteur étant configurée pour recevoir le signal RF avec un mode électromagnétique transverse, TEM ; et
le cylindre (214) étant configuré pour convertir le signal RF en l'onde de surface avec un mode magnétique transverse, TM, après la transition de la structure coplanaire à la structure de GL formée avec le cylindre (214) et la structure de plaques (204a, 204b) de masse.

3. Lanceur (103) d'ondes de surface selon l'une quelconque des revendications 1 ou 2, comportant en outre un dispositif de plate-forme configuré pour être couplé mécaniquement à au moins une partie de la PCB (202), le dispositif de plate-forme comportant :
une structure (208) d'appui ; et
une bride configurée pour se fixer à la structure (208) d'appui, la bride étant configurée pour :
appliquer une pression au cylindre (214) pour immobiliser l'isolant (212) entre au moins une partie du cylindre (214) et une partie de la ligne d'alimentation ; et
appliquer une pression au cylindre (214) pour maintenir une proximité entre le cylindre (214) et la broche de conducteur afin de maintenir un couplage électrique du cylindre (214) et de la broche de conducteur.

4. Lanceur (103) d'ondes de surface selon l'une quelconque des revendications 1 à 3, le lanceur (103) d'ondes de surface comportant en outre un connecteur sous-miniature version A, SMA, comportant :
une broche centrale couplée électriquement à la broche de conducteur ; et
une partie de masse couplée électriquement à la plage de masse, le connecteur SMA étant configuré pour se coupler mécaniquement et électriquement à un câble pour recevoir le signal RF.

5. Lanceur (103) d'ondes de surface selon l'une quelconque des revendications 1 à 4, l'isolant (212) étant en outre configuré pour isoler électriquement le cylindre (214) de signaux de puissance qui parcourent la ligne d'alimentation.

6. Lanceur (103) d'ondes de surface selon l'une quelconque des revendications 1 à 5, la structure de plaques (204a, 204b) de masse comportant une première plaque (204a) de masse positionnée physiquement à proximité du cylindre (214) d'un premier côté et une deuxième plaque (204b) de masse positionné physiquement à proximité du cylindre (214) d'un deuxième côté qui est opposé au premier côté.

7. Lanceur (103) d'ondes de surface selon l'une quelconque des revendications 1 à 6, la structure de plaques (204a, 204b) de masse constituant la référence de masse pour la broche de conducteur et le cylindre (214) sans fil de masse couplé électriquement.

8. Système de communication à large bande comportant :
un premier émetteur configuré pour être positionné physiquement à proximité d'une ligne d'alimentation, le premier émetteur étant configuré pour lancer une onde de surface sur la ligne d'alimentation ; et
un dispositif de compensation de pertes configuré pour être positionné physiquement à proximité d'un changement physique de la ligne d'alimentation, le dispositif de compensation de pertes comportant :
un récepteur configuré pour être positionné physiquement à proximité de la ligne d'alimentation d'un premier côté du changement physique de la ligne d'alimentation, le récepteur étant configuré pour :
recevoir l'onde de surface via la ligne d'alimentation ; et
convertir l'onde de surface en un signal à radiofréquence, RF ;
un deuxième émetteur configuré pour être positionné physiquement à proximité de la ligne d'alimentation d'un deuxième côté du changement physique de la ligne d'alimentation, le deuxième émetteur étant configuré pour :
recevoir le signal RF en provenance du récepteur ;
convertir le signal RF en l'onde de surface ; et
lancer l'onde de surface sur la ligne d'alimentation en aval du changement physique, le dispositif de compensation de pertes étant configuré pour contourner le changement physique de la ligne d'alimentation pour compenser une perte due au changement physique de la ligne d'alimentation ;
le premier émetteur comportant un premier lanceur (103) d'ondes de surface selon l'une quelconque des revendications 1 à 7,
la broche de conducteur étant configurée pour recevoir un signal RF à mode électromagnétique transverse, TEM, avec un mode TEM ; et
le cylindre (214) étant en outre configuré pour convertir le signal RF à mode TEM en l'onde de surface avec un mode magnétique transverse, TM ; et

9. Système de communication à large bande selon la revendication 8, le récepteur comportant :
un deuxième cylindre définissant une deuxième ouverture de cylindre, le deuxième cylindre étant configuré pour :
recevoir l'onde de surface en provenance de la ligne d'alimentation ; et
convertir l'onde de surface avec le mode TM en un autre signal RF avec le mode TEM ;
un deuxième isolant configuré pour être positionné physiquement à l'intérieur d'au moins une partie de la deuxième ouverture de cylindre et entre le deuxième cylindre et la ligne d'alimentation, le deuxième isolant étant configuré pour isoler mécaniquement le deuxième cylindre de la ligne d'alimentation et pour permettre au deuxième cylindre de recevoir l'onde de surface en provenance de la ligne d'alimentation ; et
une deuxième PCB comportant :
une deuxième broche de conducteur couplée électriquement au deuxième cylindre, la deuxième broche de conducteur étant configurée pour recevoir l'onde de surface en provenance du deuxième cylindre ; et
une plage de masse ;
une structure de plaques de masse couplée électriquement à la plage de masse et configurée pour constituer une référence de masse pour la deuxième broche de conducteur et le deuxième cylindre, la deuxième broche de conducteur et le deuxième cylindre étant positionnés physiquement à proximité de la structure de plaques de masse.

10. Système de communication à large bande selon l'une quelconque des revendications 8 ou 9, le deuxième émetteur comportant un lanceur d'ondes de surface comportant :
une troisième PCB comportant :
une troisième broche de conducteur configurée pour recevoir le signal RF en provenance du récepteur ; et
une plage de masse ;
un troisième cylindre configuré pour être couplé électriquement à la troisième broche de conducteur et définir une troisième ouverture de cylindre, le troisième cylindre étant configuré pour :
former une transition de la structure coplanaire à la structure de ligne de Goubau avec une structure de plaques de masse ;
convertir le signal RF avec le mode TEM en l'onde de surface avec le mode TM ;
générer et propager l'onde de surface ;
un troisième isolant configuré pour être positionné physiquement à l'intérieur d'au moins une partie de la troisième ouverture de cylindre et entre le troisième cylindre et l'alimentation, le troisième isolant étant configuré pour isoler mécaniquement le troisième cylindre de la ligne d'alimentation et pour permettre au troisième cylindre de fournir l'onde de surface à la ligne d'alimentation ; et
la structure de plaques de masse couplée électriquement à la plage de masse et configurée pour constituer une référence de masse pour la troisième broche de conducteur et le troisième cylindre, la troisième broche de conducteur et le troisième cylindre étant positionnés physiquement à proximité de la structure de plaques de masse.

11. Système de communication à large bande selon l'une quelconque des revendications 8 à 10, comportant en outre un deuxième récepteur positionné physiquement à proximité d'un équipement de LAN de destination, le deuxième récepteur comportant :
un quatrième cylindre définissant une quatrième ouverture de cylindre, le quatrième cylindre étant configuré pour :
recevoir l'onde de surface en provenance de la ligne d'alimentation ; et
convertir l'onde de surface avec le mode TM en un signal RF avec le mode TEM ; et
envoyer le signal RF à l'équipement de LAN de destination ;
un quatrième isolant configuré pour être positionné physiquement à l'intérieur d'au moins une partie de la quatrième ouverture de cylindre et entre le quatrième cylindre et la ligne d'alimentation, le quatrième isolant étant configuré pour isoler mécaniquement le quatrième cylindre de la ligne d'alimentation et pour permettre au quatrième cylindre de recevoir l'onde de surface en provenance de la ligne d'alimentation ; et
une quatrième PCB comportant :
une quatrième broche de conducteur couplée électriquement au quatrième cylindre, la quatrième broche de conducteur étant configurée pour recevoir l'onde de surface en provenance du quatrième cylindre ; et
une plage de masse ; et
une structure de plaques de masse couplée électriquement à la plage de masse et configurée pour constituer une référence de masse pour la quatrième broche de conducteur et le quatrième cylindre, la quatrième broche de conducteur et le quatrième cylindre étant positionnés physiquement à proximité de la structure de plaques de masse.

12. Système de communication à large bande selon l'une quelconque des revendications 8 à 11, le dispositif de compensation de pertes comportant en outre un amplificateur couplé électriquement au premier récepteur et au deuxième émetteur, l'amplificateur étant configuré pour compenser une perte due à la conversion par le premier récepteur de l'onde de surface avec le mode TM en le signal RF avec le mode TEM et à la conversion par le deuxième émetteur du signal RF avec le mode TEM en l'onde de surface avec le mode TM.

13. Procédé d'assemblage comportant les étapes consistant à :
positionner une carte à circuit imprimé, PCB, (202) à l'intérieur d'une ouverture définie par un dispositif de plate-forme, la PCB (202) comportant :
une structure de plaques de masse dotée d'une première plaque (204a) de masse et d'une deuxième plaque (204b) de masse ;
une broche de conducteur ; et
une plage de masse, la structure de plaques (204a, 204b) de masse étant couplée électriquement à la plage de masse et couplée mécaniquement à la PCB (202) ;
positionner une première partie d'un cylindre (214) à proximité de la PCB (202) de telle façon que la première partie du cylindre (214) soit couplée électriquement à la broche de conducteur et positionnée physiquement à proximité de la structure de plaques (204a, 204b) de masse, les première et deuxième plaques (204a, 204b) de masse et le cylindre (214) formant une ligne de Goubau coplanaire et une transition de la ligne de Goubau coplanaire à une structure de ligne de Goubau à l'extrémité des première et deuxième plaques (204a, 204b) de masse ;
positionner une première partie d'un isolant (212) à proximité de la première partie du cylindre (214) ;
positionner la PCB (202), la première partie du cylindre (214) et la première partie de l'isolant (212) par rapport à une ligne d'alimentation de telle façon que la première partie de l'isolant (212) soit positionnée physiquement à proximité de la ligne d'alimentation ;
positionner une deuxième partie de l'isolant (212) à proximité de la première partie de l'isolant (212) et de la ligne d'alimentation ;
positionner une deuxième partie du cylindre (214) à proximité de la deuxième partie de l'isolant (212) de telle façon que la première partie du cylindre (214) et la deuxième partie du cylindre (214) définissent une ouverture de cylindre, au moins une partie de la première partie de l'isolant (212) et de la deuxième partie de l'isolant (212) étant positionnée à l'intérieur de l'ouverture de cylindre et la ligne d'alimentation s'étendant à travers l'ouverture de cylindre et au moins une partie de l'isolant (212) s'étendant au-delà du cylindre (214) pour empêcher l'amorçage d'un arc entre la ligne d'alimentation et le cylindre (214) ; et
fixer une bride au dispositif de plate-forme de telle façon qu'au moins une partie de la première partie du cylindre (214), de la deuxième partie du cylindre (214),
de la première partie de l'isolant (212) et de la deuxième partie de l'isolant (212) soit positionnée physiquement entre une partie de la bride et une partie du dispositif de plate-forme.

14. Procédé d'assemblage selon la revendication 13, comportant en outre la fixation d'un métal d'apport de brasage entre la broche de conducteur et le cylindre (214), la brasure étant configurée pour assurer un soutien au cylindre (214).

15. Procédé d'assemblage selon l'une quelconque des revendications 13 ou 14, le procédé comportant en outre le couplage mécanique du dispositif de plate-forme à un pôle de puissance positionné physiquement à proximité de la ligne d'alimentation.
